# EUROPEAN PATENT APPLICATION

(11) **EP 4 537 676 A2**
(43) Date of publication of application: **16.04.2025**
(21) Application number: 25160217.3
(22) Date of filing: 20.12.2021
(51) Int. Cl.: A23L 29/294

(54) **XANTHAN-BASED LIQUID CONCENTRATE**

(30) Priority: 24.12.2020 EP 20217207
(62) Divisional of application: 21840014.1
(71) Applicant: Société des Produits Nestlé S.A., 1800 Vevey (CH)
(72) Inventor: JEDWAB, Michael Reuben, 1005 LAUSANNE (CH); STEVENSON, Nancy, Linwood, New Jersey, 08221 (US); CHISHOLM, Helen, 1033 CHESEAUX (CH); GUNES, Zeynel Deniz, 1000 LAUSANNE (CH); BURBIDGE, Adam Stewart, 1273 ARZIER (CH)
(74) Representative: Gordon, Kirsteen Helen

(57) **Abstract**

A liquid thickener composition useful for subjects suffering from a dehydration, mastication and/or deglutination disease, disorder or condition, a container comprising the liquid thickener composition, a system comprising the container and a dispenser, a thickened liquid composition comprising the liquid thickener composition, a method for producing the liquid thickener composition and the thickened liquid composition are provided.

## Description

### Background

The present invention relates to thickener compositions. More particularly the invention relates to compositions comprising xanthan gum and acacia gum and uses thereof.

Swallowing problems in humans include difficulty in swallowing, inability to swallow, and discomfort in swallowing. These problems are collectively termed dysphagia. Dysphagia is a common secondary condition that accompanies many primary human disease states such as stroke, multiple sclerosis, Asperger's syndrome, esophageal cancer, laryngeal cancer, chagus disease, cystic fibrosis, Huntington's chorea, amyotrophic lateral sclerosis, Parkinson's disease, Riley-Day syndrome, scleroderma, and Alzheimer's disease. Dysphagia can also occur due to a birth defect. In pre-term infants, dysphagia may occur because the musculature and anatomy involved in swallowing has not yet fully developed.

Human subjects with dysphagia generally lack proper muscle control and coordination to properly seal the windpipe or they lack the ability to properly propel the bolus of food and/or beverage to the stomach. If this condition goes unnoticed, subjects are prone to foodstuff(s) and beverages going into the subject lungs rather than being routed properly to their gastrointestinal tract. When routing to the lungs occurs, the subject is at increased risk for growing disease-causing bacteria in the lungs, which raises the prospect of aspiration pneumonia (with its accompanying attendant risks and hospitalization) and/or even fatal asphyxiation. This risk is exacerbated if the patient is malnourished, with a depressed immune system, as is often the case with dysphagic patients.

At least half of the subjects with dysphagia might benefit from a thickened diet. Thin fluids like water move rapidly through the human swallowing process and they have the least body or texture. Controlling the bolus with these fluids can be very difficult. Any delayed or slowed movement and/or coordination during the swallowing process will more likely be a problem with a thin fluid because it moves so quickly through the mouth and into the throat. The lack of body or texture means that thin fluids are less likely to create the stimulation necessary for proper swallowing in people with dulled swallowing sensation. Moreover, there is a high risk of aspiration into the lung. By thickening fluids intended to be drunk or eaten by a person afflicted with dysphagia, it is possible to slow the progress of the fluid through the throat, to produce a bolus that is easier to control, and/or to increase the body or texture of the fluid to increase the likelihood of generating the necessary stimulation for proper swallowing. A benefit of such thickened fluids and thickened compositions, particularly in context of shear-thinning compounds and fluids, such as xanthan containing solutions, is that less residue and fluid is left behind in the throat, thereby reducing the risk of residues flowing into the windpipe. Less swallows are then required to move the fluid into the stomach that would otherwise be left behind at least partially in the throat or be aspirated into the lung.

The use of a xanthan gum has been implicated in the provision of thickener that can be used to provide a thickened liquid useful in the treatment of a variety of swallowing disorders.

However, concentrated xanthan thickeners at the required high concentration are generally very difficult to achieve. Xanthan is typically dissolved in water in concentrations of about 2% w/w maximally since solubility of xanthan reaches a plateau where no more xanthan can be hydrated simply by using high shear mixing methods and without improved processing conditions. When dissolving xanthan at higher concentrations, e.g., above 2%, , the process leads to a very strong gel due to hydration limits even when using high shear stand mixers and even to a dough-like structure after pasteurization. Reconstitution of such gels in a beverage or generally in a liquid is either impossible or occurs only very slowly (e.g., 15-20 minutes by mechanical stirring and even longer by hand stirring). Such extreme slow dissolution processes are not suitable for commercial purposes and largely lead to clumping, formation of fish eyes and generally to inhomogeneous liquid compositions. Moreover, shelf life of such inhomogeneous and poorly dissolved liquid compositions is compromised in many cases, which may lead to unwanted microbial contamination and phase separation effects.

It was therefore an object of the invention to identify ingredients and optimized processes that can allow increasing the concentration of such compositions comprising xanthan gum and also accelerate reconstitution of such a composition. It was a further object to increase the shelf life of these compositions (in particular to reduce phase separation of the thickener) and to improve other properties of a thickener composition comprising xanthan. In particular it was an object to provide a stable composition, preferably in form of a gel, that could be stored, e.g., in a closed bottle or container typically filled under aseptic conditions, during envisaged shelf-life, e.g., of typically at least several months, preferably at least 1 year, without thickening. Moreover, during storage microbial growth and phase separation should be avoided. Finally, once such a bottle or container is opened, a shelf life of at least a few weeks of the composition should be achieved when in contact with atmosphere.

### Summary

The invention is defined in the appended claims. Further preferred embodiments are defined below.

In particular, the invention is directed to a liquid thickener composition comprising xanthan gum and acacia gum with the herein described amounts. Moreover, the invention is directed to a method for preparing such a liquid thickener composition comprising xanthan gum and acacia gum.

It was surprisingly found that a composition comprising xanthan gum and acacia gum as defined herein can be readily reconstituted in a beverage or foodstuff and solved the objects outlined above.

Without wishing to be bound to any theory, it is assumed that acacia gum and xanthan gum readily form a microstructure with each other, which prevents the full hydration and thus the gel formation of xanthan gum. Thus, this microstructure or dispersion structure also prevents full hydration of xanthan in water until final use and dilution in a beverage by a subject. During final use and dilution acacia gum is displaced by the beverage which is primarily water and a good solvent for xanthan resulting in further or full hydration of the beverage. The dispersion structure maintains xanthan gel particles separate and discrete and speeds up final full hydration by avoiding lumping.

"Full hydration" in the context of the current invention may be said to occur when, for a given volume of liquid thickener composition (e.g. as a gel) added to a given volume of liquid, the reconstituted liquid reaches a maximum viscosity which is stable over time. "Further hydration" in the context of the current invention may be said to occur when an incremental further amount of liquid thickener composition (e.g. as a gel) is added to the above-mentioned fully hydrated liquid, and further increase of viscosity occurs. This in turn is said to be fully hydrated once a new viscosity is reached that is stable over time

It is understood that this operation cannot be performed perpetually, and eventually the reconstituted liquid cannot accept any more liquid thickener composition, and will therefore not thicken any further.

Likewise, without wishing to be bound to any theory, it is therefore assumed that according to the current invention the hydration process of xanthan gum powder by a liquid, beverage, or foodstuff, such as water, can be distinguished into four different stages. In a first stage, a xanthan gum powder is wetted by the liquid acacia gum premix. In a second stage, the liquid acacia gum premix penetrates the powder particles of the xanthan gum and leads to "swollen" xanthan gum particles. According to a third stage, the "swollen" xanthan gum particles break up and according to a fourth stage the xanthan gum particles are further or even fully hydrated. While the inventive liquid thickener composition and the method of preparation of the inventive liquid thickener composition encompass the first and the second stage of the hydration process of xanthan gum, stages three and four of the hydration process occur when thickening a foodstuff, preferably a liquid, beverage or foodstuff, with the inventive liquid thickener composition.

Thus, the invention is directed to a liquid thickener composition comprising xanthan gum and acacia gum forming a microstructure substantially preventing the hydration of the xanthan gum.

The liquid thickener composition may comprise typically about 1, 2, 3, or 4 % w/w to about 20 % w/w, preferably about 4 % w/w to about 15 % w/w, likewise preferably about 4% w/w to about 12 % w/w, more preferably about 5 % w/w to about 11 % w/w, even more preferably about 6 % w/w to about 10 % w/w, and most preferably about 7 % w/w to about 9 % w/w or even about 7.5 % w/w to about 8.5 % w/w xanthan gum.

If not defined otherwise in the current application, all % values herein concerning amounts of components shall indicate % weight by weight of the (liquid) composition, also abbreviated as % w/w.

The liquid thickener composition may therefore also comprise typically about 10 % w/w to about 50 % w/w, or even about 10 % w/w to 40 % w/w of an acacia gum as defined herein,
- preferably about 10 % w/w to about 40 % w/w, likewise preferably about 10 % w/w to about 30 % w/w, more preferably about 15 % w/w to about 20 % w/w, even more preferably 17.5 % w/w or 17.6 % w/w to about 20 % w/w, and most preferably about 17.5 % w/w to about 18.5 % w/w of an acacia gum as defined herein, e.g., acacia senegal,
- alternatively, preferably about 20 % w/w to about 50 % w/w, likewise preferably about 20 % w/w to about 40 % w/w, or more preferably about 25 % w/w to about 40 % w/w, even more preferably about 25 % w/w to about 35 % w/w, and most preferably about 27.5 % w/w to about 32.5 % w/w, such as about 30 % w/w of an acacia gum as defined herein, e.g., acacia seyal or any other acacia gum except acacia senegal, or alternatively
- a mixture of acacia senegal with acacia seyal or any other acacia gum in a range of from about 10 % w/w to about 50 % w/w, about 10 % w/w to about 40 % w/w, likewise preferably about 10 % w/w to about 35 % w/w or any of the ranges depicted for one of the above captioned first and second alternatives.

A liquid thickener composition formulated within any of these xanthan gum composition ranges and within any of these acacia gum composition ranges forms the desired microstructure and can be reconstituted rapidly to a thickened liquid with a liquid, beverage or foodstuff. Any combination of xanthan gum composition ranges and acacia composition ranges is encompassed herein. Preferably, the liquid thickener composition contains in addition to xanthan only one or two further shear-thinning thickener gums, more preferably only one further shear-thinning thickener and likewise more preferably no further shear-thinning thickener except xanthan, i.e., xanthan is the only shear-thinning thickener of the inventive liquid thickener composition. Even more preferably, the thickener components /gums of the liquid thickener composition consist of xanthan gum in combination with acacia gum in amounts and ranges as defined herein. Salts, buffering salts, preservatives, antifoaming agents, food acids, pectin and/or low methoxy pectin, and water, as defined below, may nevertheless be comprised as defined below. Shear-thinning thickener in this context other than xanthan are known to a skilled person, e.g., carrageenan, guar gum, locust bean gum, etc.

The xanthan gum may be a xanthan gum as defined below.

The acacia gum may be an acacia gum as defined below.

The liquid thickener composition may further comprise pectin or low methoxy pectin. It was generally found that pectin, especially low methoxy pectin, can further reduce phase separation phenomena in the obtained thickener composition. Pectin or low methoxy pectin is preferably added together with a salt, especially a divalent earth alkaline salt, more especially a calcium salt, a magnesium salt, e.g., CaCl₂ or MgCl₂, as defined below.

Alternatively or in addition, the liquid thickener composition may further comprise a salt, especially a divalent earth alkaline salt, more especially a calcium salt, a magnesium salt, e.g., CaCl₂ or MgCl₂, and/or optionally further salts.

Similar to the pectin it was found that a salt as defined herein, especially a divalent earth alkaline salt, such as a calcium salt or a magnesium salt, e.g., CaCl₂ or MgCl₂, can further reduce phase separation phenomena in the obtained liquid thickener composition.

Alternatively or additionally to the addition of pectin and/or salts as described above, the liquid thickener composition may be stabilized by degassing or removing air bubbles from the liquid thickener composition.

The liquid thickener composition may further comprise a preservative as defined herein. Preferably, the liquid thickener composition may comprise at least one or at least two different preservatives, wherein optionally one of the preservatives is sorbic acid, a sorbate or sorbate salt, such as sorbic acid, potassium sorbate, calcium sorbate, etc., preferably potassium sorbate, and optionally the second preservative is a benzoate, such as sodium or potassium benzoate, etc., preferably sodium benzoate.

It was surprisingly found that a combination of two different preservatives, for example a sorbate salt and a benzoate, may be particularly effective at preventing the growth of microbes, like mold or bacteria.

Such preservatives, particularly when used in combination, may allow a) to prevent microbial growth or spoilage of a liquid thickener composition during storage, e.g., in a container or bottle and typically prior to use, and b) to prevent microbial growth or spoilage from outside sources, when the container or bottle is opened to prepare a liquid thickened composition.

The liquid thickener composition may further comprise
- a buffering salt
- an antifoaming agent, and/or
- a food acid.

A buffering salt, like a citrate or sodium citrate may be used to stabilize the pH of the thickener composition, particularly when mixing the xanthan gum to the acacia gum premix when preparing the liquid thickener composition as described herein.

Antifoaming agents, like e.g., monoglycerides (of fatty acids), may be added to the liquid thickener composition. Monoglycerides of (fatty acids) have been found to be particularly effective at preventing the formation of foam when mixing xanthan and acacia solutions and in consequence allow increasing the shelf life of the thickener composition by avoiding inclusion of air and bubbles. Likewise, diglycerides (of fatty acids) may be added for the same purpose. Both mono- and diglycerides may be also used to reduce or prevent foam formation when mixing an acacia gum premix as described herein below.

Food acids, like phosphoric acid and/or citric acid, etc. may be added to the liquid thickener composition, preferably to further stabilize the thickener composition and/or to adapt the pH of the liquid thickener composition accordingly. Phosphoric acid allows to efficiently prevent antimicrobial spoiling, minimizes off-flavors, and is more neutral in taste.

The liquid thickener composition can be diluted in beverages, liquid foodstuff or water to obtain a liquid thickened composition.

Therefore, the invention is also directed to a liquid thickened composition comprising the thickener composition.

For storage and transport the liquid thickener composition can be stored in a container suitable for storing food-grade liquids.

Therefore, the invention is also directed to a container comprising the liquid thickener composition.

The invention is also directed to a storage and delivery system comprising the container and a dispenser. In this way, the liquid thickener composition can be easily dispensed from the container into a liquid, beverage or foodstuff.

Furthermore, the invention is directed to the liquid thickener composition or (a correspondingly) liquid thickened composition for use in feeding a subject suffering from a dehydration, mastication, swallowing and/or deglutination disease, disorder or condition, preferably dysphagia.

The invention is also directed to a method for providing a liquid thickened composition comprising:
a. providing the liquid thickener composition described herein and a liquid, beverage or foodstuff for dissolving said liquid thickener composition;
b. mixing said liquid thickener composition and said liquid for dissolving said liquid thickener composition, preferably 1, 2, 3, 4, 5, or 6 or more doses of said liquid thickener composition on a reference volume of a liquid, beverage or foodstuff as defined herein; and thereby
c. providing the liquid thickened composition, preferably having a level of any of IDDSI levels 1, 2, 3, or 4; and/or providing the liquid thickened composition, preferably having a viscosity level of any of the inventive viscosity levels of 1-120 mPa.s (preferably equivalent to IDDSI level 1), of 121-300 mPa.s (preferably equivalent to IDDSI level 2), of 301-500 mPa.s (preferably equivalent to IDDSI level 3) or of > 501 mPa.s (preferably equivalent to IDDSI level 4), typically as measured preferably at room temperature (20°C) and preferably at a shear rate of 50s⁻¹.

The invention is also directed to a method for producing a liquid thickener composition comprising:
a. providing a liquid composition comprising acacia gum (acacia gum premix);
b. adding to the acacia gum premix a composition comprising xanthan gum; and thereby
c. providing the liquid thickener composition comprising acacia gum and xanthan gum, and
d. optionally, degassing the liquid thickener composition comprising acacia gum and xanthan gum provided in step c., preferably prior to storage and further processing of the liquid thickener composition provided in step c.

The liquid thickener composition produced by this process is preferably a liquid thickener composition as described herein.

It has been surprisingly found that degassing the liquid thickener composition comprising acacia gum and xanthan gum provided in step c., preferably prior to storage or further processing, assists in reducing phase separation phenomena.

Degassing generally may be carried out in step d. by techniques known to a skilled person, e.g., by stirring the composition, e.g., at low shear forces, or by "naturally" degassing the composition by storing the composition in a storage tank, or any further known technique. "Degassing" is preferably understood to mean the removal of entrapped air or air bubbles. "Natural" degassing preferably means degassing the composition without further mechanical support, such as stirring, but solely by natural or physical processes over time. Natural degassing in general may occur for 1, 2, 3, 4, or 5-12 hours up to 3 or 4 days, more preferably between 12 hours and 3 days or 1 to 3 days, e.g., overnight.

Without being bound to any theory it is assumed that as a consequence of the initial mixing of the acacia gum premix and the xanthan gum containing composition the formed liquid thickener composition provided in step c. is saturated with gaseous compounds, forming bubbles or microbubbles promoting phase separation. Gaseous compounds may be generally introduced by both compositions, i.e., the acacia gum premix and the xanthan gum containing composition, however, the xanthan gum containing composition is considered to provide a significant part of such gaseous compounds, particularly when the xanthan gum containing composition is added in dry from (powder form) to the acacia gum premix. Formation of gaseous compounds or creaming in the acacia gum premix prior to the addition in step b. is preferably reduced or avoided by reducing or avoiding foam formation already when preparing the acacia gum premix, e.g., by adding an antifoaming agent, such as mono- or diglycerides, preferably monoglycerides. Degassing then effectively removes the gaseous compounds from the liquid thickener composition obtained in step b. and thus reduces phase separation phenomena.

The method may also comprise in step a.: providing a composition comprising acacia gum and pectin, and adding said composition to a liquid.

It has been surprisingly found that pectin, especially low methoxy pectin, can further reduce phase separation phenomena. It was also surprisingly found that this effect occurs when pectin and acacia gum are mixed prior to adding xanthan gum.

Alternatively, acacia gum may be mixed with an antifoaming agent, e.g., mono- or di-glycerides, preferably monoglycerides, more preferably prior to adding the acacia gum premix of step a. to the xanthan gum containing composition in step b.

The method may therefore comprise in step a.: providing a composition comprising acacia gum and mono- or di-glycerides, and adding said composition to a liquid.

As a preferred embodiment degassing may be carried out on the liquid thickener composition provided in step c. e.g., with prior addition of an antifoaming agent, e.g., mono- or di-glycerides, preferably addition of monoglycerides, as defined herein, to the acacia gum premix in step a., then adding the acacia gum premix to the xanthan gum containing composition in step b., and optionally degassing the finally obtained liquid thickener composition provided in step c. This particular sequence advantageously reduces formation of foam and avoids creaming effects in further processing steps and also increases shelf-life of the resulting liquid thickener composition.

The method may also comprise in step a): providing a liquid comprising a buffering salt, an antifoaming agent, a preservative, and/or an acid, adding a composition comprising acacia gum, all of which are preferably as defined herein.

Finally, the invention is also directed to a liquid thickener composition described above obtainable by the method for producing a liquid thickener composition described above.

### Detailed description

The term "xanthan gum" as used herein relates to a hetero-polysaccharide of high molecular weight commonly used as a food thickening agent and as a stabilizer. Its main chain is constituted of glucose units and its side chain is a trisaccharide consisting of alpha-D-mannose, which contains an acetyl group, beta-D-glucuronic acid, and a terminal beta-D-mannose unit linked with a pyruvate group.

"Gum acacia" or "acacia gum" (also often designated as "gum arabic") as used herein is a natural exudate from the trunks and branches of the plants that belong to the genus Acacia (especially preferred herein Acacia senegal and Acacia seyal) of the Leguminasae family. Gum acacia is highly soluble in water and its aqueous solution provides high emulsifiabil-ity, emulsion stability, encapsulation ability, adhesiveness, protective colloid property and film-forming ability even at low concentration.

Gum acacia is collected in various countries in the Sahara region of Africa and has a wide variation in molecular weight and composition of constituent components due to differences in the soil and climate in each habitat and age of the original tree. In the present description, such gum acacia is referred to as simply "gum acacia" or "natural gum acacia" or "unmodified gum acacia." Modified forms of gum acacia are also known and are all considered to follow under the scope of the term gum acacia (e.g., WO 2004/089991 A1).

Unmodified gum acacia (Acacia senegal) generally contains arabinogalactan-protein (AGP) in a proportion of 5-15 % w/w. An acacia gum as used according to the current invention is preferably selected from any acacia gum as described above including acacia senegal, acacia seyal and also modified forms of acacia gum as defined in WO 2004/089991 A1, preferably from acacia senegal or acacia seyal or a combination of both, more preferably from acacia senegal.

The acacia gum as used herein may be an acacia gum with high arabino-galacto-glucan (AGP) levels. Such an acacia gum is preferably selected from acacia senegal. In this context, the preferred arabino-galacto-glucan (AGP) levels are defined below.

Accordingly, such an acacia gum is preferably selected from an acacia gum comprising about 8% w/w to about 30% w/w, 9% w/w to about 20% w/w, 10% w/w to about 15 % w/w, at least 8% w/w, at least 9 % w/w, at least 10% w/w, at least 11% w/w, at least 12% w/w, at least 13% w/w, or at least 15% w/w of arabinogalactan-protein (AGP) compared to the total amount of the respective acacia gum.

It was found that an acacia gum with high arabino-galacto-glucan (AGP) levels and/or an acacia gum with high emulsifying properties, such as Acacia senegal, is particularly useful in reducing phase separation phenomena in the obtained liquid thickener composition.

The term "pectin" refers to polysaccharides generally having a backbone consisting of a linear polymer of galacturonic acid and some branches of neutral sugars. Commercial pectins are derived from a variety of fruits or vegetable sources, mainly apple and citrus fruits. The carboxyl groups of the polygalacturonic acid are partly esterified by methanol. The ratio of methyl esterified galacturonic acid groups to total galacturonic acid groups is termed "degree of esterification".

The term "low-methoxy pectin" refers to a type of pectin that has been partially de-esterified. Typically, the degree of esterification (DE) is below 50%.

The term "low shear mixing" refers to non-turbulent or minimally turbulent mixing, such as gentle mixing or stirring with a spoon or the like. It would be understood that low-shear mixing may be defined in terms of shear rates and typically is a function of a number of variables, such as mixing vessel configuration and mixing device speed. The "low-shear mixing" in the context of the current invention typically comprises stirring at a speed of from about 10 rpm to about 350 rpm, preferably at a speed of from about 50 rpm to about 325 rpm, likewise preferably at a speed of from about 100 rpm to about 300 rpm, more preferably at a speed of from about 125 rpm to about 275 rpm, even more preferably at a speed of from about 150 rpm to about 250 rpm, likewise more preferably at a speed of from about 175 rpm to about 225 rpm, most preferably at a speed of from about 190 rpm to about 210 rpm, e.g. about 200 rpm, (e.g., about 10, 15, 20, 25, 30, 35, 40, 45, 50, 55, 60, 65, 70, 75, 80, 85, 90, 95, 100, 110, 120, 130, 140, 150, 160, 170, 180, 190, 200, 210, 220, 230, 240, 250, 260, 270, 275, 280, 290, 300, 310, 320, 325, 330, 340, or 350 rpm or any range therein), the rpm numbers typically calculated on an YTRON-ZC 0 ContiCone (2,2 kW motor, 50 Hz, 400V, 5mm teeth).

The "high-shear mixing" in the context of the current invention typically comprises stirring at a speed of from about 351 rpm or above, e.g., typically at a speed of from about 351 to 1100 rpm, preferably at a speed of from about 400 to 1000 rpm, more preferably at a speed of from about 450 to 900 rpm, even more preferably at a speed of from about 450 to 800 rpm, most preferably at a speed of from about 500 to 750 rpm, e.g., at a speed of about 500 rpm, about 600 rpm, about 700 rpm or about 750 rpm, (e.g., about 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 200, 150, 300, 350, 400, 450, 500, 550, 600, 650, 700, 750, 800, 850, 900, 950, 1000, 1050, or 1100 rpm or any range therein or even above), the rpm numbers typically calculated on an YTRON-ZC 0 ContiCone (2,2 kW motor, 50 Hz, 400V, 5mm teeth).

The low-shear or high-shear mixing in the context of the current invention is preferably applied for about 5 or 10 seconds to about 600 seconds, for about 5 or 10 seconds to about 480 seconds, for about 5 seconds to about 240 seconds, for about 5 seconds to about 180 seconds, for about 5 seconds to about 160, or any range in-between 5 to 480 seconds, formed by any of such values.

Preferably, high-shear mixing is carried out in the context of the current invention for about 5 or 10 seconds to about 480 seconds, or for about 5 or 10 seconds to about 240 seconds, or even more preferably for about 10 seconds to about 180 seconds, or for about 20 seconds to about 160 seconds, likewise preferably for about 5 seconds to about 120 seconds, or for about 5 seconds to about 100 seconds, or for about 5 seconds to about 160 seconds, or for about 5 seconds to about 120 seconds, or for about 5 seconds to about 60 seconds, or for about 5 seconds to about 40 seconds, or for about 5 seconds to about 20 seconds, or for about 5 seconds to about 10 seconds, or any range in-between formed by any of such values.

Likewise preferably, low-shear mixing is carried out in the context of the current invention for about 5 or 10 seconds to about 600 seconds or more, for about 5 or 10 seconds to about 480 seconds, or for about 5 or 10 to about 240 seconds, or even more preferably for about 5 to about 180 seconds, or about 5 to about 60 seconds or even less, likewise preferably for about 5 seconds to about 120 seconds, or for about 5 seconds to about 100 seconds, or for about 5 seconds to about 160 seconds, or for about 5 seconds to about 120 seconds, or for about 5 seconds to about 60 seconds, or any range in-between formed by any of such values.

According to a particular embodiment, low-shear mixing and/or high-shear mixing in the context of the current invention may be carried out in dependence of a degassed or a non-degassed state of a composition and/or premix as defined herein. The correlated rpm numbers indicated below are typically calculated on an YTRON-ZC 0 ContiCone (2,2 kW motor, 50 Hz, 400V, 5mm teeth).

According to one such particular embodiment, low-shear mixing may be carried out in the context of the current invention on a non-degassed composition e.g., preferably at a speed of from about 190 rpm to about 210 rpm, preferably 200 rpm.

Likewise, according to one such particular embodiment, low-shear mixing may be carried out in the context of the current invention on a degassed composition e.g., preferably at a speed of from about 190 rpm to about 210 rpm, preferably 200 rpm.

Moreover, according to one such particular embodiment, high-shear mixing may be carried out in the context of the current invention on a non-degassed composition e.g., preferably at a speed of from about 500 rpm to about 750 rpm, e.g., 500 rpm.

Likewise, according to one such particular embodiment, high-shear mixing may be carried out in the context of the current invention on a degassed composition e.g., preferably at a speed of from about preferably 500 to 750 rpm, e.g., 600 rpm.

In any of the above-mentioned cases rpm numbers are typically calculated on an YTRON-ZC 0 ContiCone (2,2 kW motor, 50 Hz, 400V, 5mm teeth).

The term "about" in the context of the present invention is understood to relate to a range around a specific given value or amount. For example, the range may be +/- 10%, +/- 5 %, +/- 3 %, +/- %1, or +/- 0.1 % of a specified value or amount.

"Room temperature" in the context of the present invention is typically defined as about 20°C, preferably 20°C.

The term "rapid reconstitution" within the context of the current invention preferably means that the desired viscosity of the thickened solution is build up, or in other words the further or full hydration of the xanthan upon dilution in a beverage or liquid is achieved, within a short time, preferably between 10 seconds to 40 minutes, between 10 seconds to 30 minutes, between 10 seconds to 15 minutes, or between 10 seconds to 10 minutes, more preferably between 10 seconds and 5 minutes, between 10 seconds and 4 minutes, or between 10 seconds and 3 minutes, even more preferably between 30 seconds to 40 minutes, between 30 seconds to 30 minutes, between 30 seconds and 5 minutes, most preferably between 30 seconds and 4 minutes, or even between 30 seconds and 3 minutes, e.g., between 1 minute and 10 minutes, between 2 and 8 minutes, between 3 and 6 minutes, and between 4 and 5 minutes. Particularly preferred is generally a range of between 30 seconds to 30 minutes, and most preferably of between 4 and 6 or even 4 to 5 minutes, preferably calculated for reconstitution in water as a liquid. "Rapid reconstitution" within the context of the current invention preferably allows preparation of the liquid thickened solution with a herein described liquid thickener composition in an efficient manner.

All percentage values relating to amounts are understood to relate to % in weight/weight (% w/w) if not indicated otherwise.

All components of the compositions disclosed herein are food-grade components.

In particular, the invention is directed to a liquid thickener composition comprising xanthan gum and acacia gum as defined herein.

The liquid thickener composition therefore typically comprises about 4 % w/w to about 20 % w/w, preferably about 4 % w/w to about 15 % w/w, likewise preferably about 4 % w/w to about 12 % w/w, more preferably about 5 % w/w to about 11 % w/w, even more preferably about 6 % w/w to about 10 % w/w, and most preferably about 7 % w/w to about 9 % w/w, or even 7.5 % w/w to about 8.5 % w/w xanthan gum.

The liquid thickener composition may therefore also comprise about 10 % w/w to about 50 % w/w, preferably about 10 % w/w to about 40 % w/w, about 10 % w/w to about 30 % w/w of an acacia gum as defined herein, e.g.,
- about 10 % w/w to about 40 % w/w, likewise preferably about 10 % w/w to about 30 % w/w, or about 10 % w/w to about 25 % w/w, more preferably about 15 % w/w to about 20 % w/w, about 17.5 % w/w or about 17.6 % w/w to about 20 % w/w, and most preferably about 17.5 % w/w to about 18.5 % w/w of an acacia gum as defined herein, e.g., acacia senegal, or alternatively
- about 20 % w/w to about 50 % w/w, about 20 % w/w to about 40 % w/w, or about 25 % w/w to about 40 % w/w, or about 25 % w/w to about 35 % w/w, and most preferably about 27.5 % w/w to about 32.5 % w/w by weight of an acacia gum as defined herein, e.g., acacia seyal, or any other acacia gum except acacia senegal, or likewise alternatively
- a mixture of acacia senegal with acacia seyal or any other acacia gum in a range of from about 10 % w/w to about 50 % w/w, about 10 % w/w to about 40 % w/w, likewise preferably about 10 % w/w to about 35 % w/w or any of the ranges depicted for one of the above captioned first and second alternatives.

Most preferably, the acacia gum used for the liquid thickener composition is acacia senegal.

Any combination of the above disclosed ranges for xanthan and acacia gum is encompassed herein. For example, the composition can comprise about 4% w/w to about 20 % w/w of a xanthan gum as defined herein and additionally about 10% w/w to about 50 % w/w of an acacia gum as defined herein and or any subrange of xanthan gum and acacia gum as defined herein, e.g., about 6 % w/w to about 10 % w/w xanthan gum and about 17.5% w/w to about 20% w/w of acacia gum, e.g., acacia senegal gum, or about 6% w/w to about 10 % w/w xanthan gum and about 27.5 % w/w to about 32.5 % w/w of acacia gum, e.g., acacia seyal gum, etc., or any mixture of acacia senegal gum with acacia seyal gum or any other acacia gum within any of the above mentioned ranges.

The acacia gum can preferably be an acacia gum as disclosed above with high emulsifying properties. Likewise preferably, the acacia gum can be an acacia gum having a high arabinogalactan-protein (AGP) content. Such a acacia gum is preferably an acacia gum comprising about 8% w/w to about 30% w/w, 9% w/w to about 20% w/w, 10% w/w to about 15 % w/w, at least 8% w/w, at least 9 % w/w, at least 10% w/w, at least 11% w/w, at least 12% w/w, at least 13% w/w, or at least 15% w/w of arabinogalactan-protein (AGP) .

The liquid thickener composition can comprise pectin, for example low methoxy pectin. The composition can comprise about 0.01 % w/w to about 2 % w/w, about 0.1 % w/w to about 1 % w/w, about 0.1 % w/w to about 0.5 % w/w, about 0.15 % w/w to about 0.4 % w/w, about 0.15 % w/w to about 0.25 % w/w, or about 0.2% w/w pectin. The composition can comprise about 0.01 % w/w to about 2 % w/w, about 0.1 % w/w to about 1 % w/w, about 0.1 % w/w to about 0.5 % w/w, about 0.15 % w/w to about 0.4 % w/w, about 0.15 % w/w to about 0.25 % w/w low methoxy pectin.

The liquid thickener composition can comprise a calcium salt, e.g., anhydrous calcium chloride, CaCl₂, or calcium chloride dihydrate. The composition can comprise about 20 ppm to about 150 ppm, 30 ppm to about 100 ppm, or about 50 ppm to about 800 ppm of soluble calcium ions. The calcium salt can be contained in any of the added gums or added, for example, as anhydrous calcium chloride, CaCl₂, or calcium chloride dihydrate. The composition can comprise about 0.01 % w/w to about 0.7 % w/w, about 0.05 % w/w to about 0.6 % w/w, about 0.1 % w/w to about 0.5 % w/w, about 0.1 to about 0.4 % w/w, about 0.1 % w/w to about 0.25 % w/w calcium salt, preferably anhydrous calcium chloride, CaCl₂, or calcium chloride dihydrate, more preferably calcium chloride dihydrate.

The liquid thickener composition can also comprise a magnesium salt, e.g., anhydrous magnesium chloride, MgCl₂ or magnesium chloride dihydrate. The composition can comprise about 20 ppm to about 150 ppm, 30 ppm to about 100 ppm, or about 50 ppm to about 800 ppm of soluble magnesium ions. The magnesium salt can be contained in any of the added gums or added, for example, as anhydrous magnesium chloride, MgCl₂ or magnesium chloride dihydrate. The composition can comprise about 0.01 % w/w to about 0.7 % w/w, about 0.05 % w/w to about 0.6 % w/w, about 0.1 % w/w to about 0.5 % w/w, about 0.1 % w/w to about 0.4 % w/w, about 0.1 % w/w to about 0.25 % w/w magnesium salt, preferably anhydrous magnesium chloride, MgCl₂, or magnesium chloride dihydrate, more preferably magnesium chloride dihydrate.

The liquid thickener composition can comprise at least one (food-grade) preservative.

Suitable (food grade) preservatives include, but are not limited to, vitamin E, sorbic acid or a sorbate or sorbate salt, such as potassium sorbate, calcium sorbate, etc., preferably potassium sorbate, a benzoate, such as sodium or potassium benzoate, etc., preferably sodium benzoate, sodium metabisulphite, methyl paraben, EDTA, sulphur dioxide, nisin and/or propionic acid. The composition can comprise about 0.01 % w/w to about 0.1 % w/w, about 0.05 % w/w to about 0.09 % w/w, about 0.06 % w/w or 0.07 % w/w to about 0.09 % w/w of each preservative, each range by weight of the composition.

Preferably, the liquid thickener composition can comprise at least two different preservatives. The preservatives can be a sorbate salt and a benzoate salt. The composition can comprise about equal amounts of the two preservatives. The composition can comprise about equal amounts of a sorbate salt and a benzoate salt. The composition can comprise of each preservative about 0.01 % w/w to about 0.1 % w/w, about 0.05 % w/w to about 0.09 % w/w, about 0.06 % w/w or 0.07 % w/w to about 0.09 % w/w. The composition can comprise of the sorbate salt and the benzoate each about 0.01 % w/w to about 0.1 % w/w, about 0.05 % w/w to about 0.09 % w/w, about 0.06 % w/w to about 0.09 % w/w, or about 0.08% w/w. The sorbate salt can be sodium benzoate and the sorbate can be potassium sorbate. More preferably, the liquid thickener composition may comprise at least two different preservatives, wherein optionally one of the preservatives is a sorbate such as potassium sorbate, and optionally the second preservative is a benzoate, such as sodium benzoate, preferably each in a range of about 0.05 % w/w to about 0.09 % w/w, or about 0.06 % w/w to about 0.09 % w/w by weight of the composition.

The liquid thickener composition can comprise an anti-foaming agent. The anti-foaming agent can be a mono- or diglyceride, especially a monoglyceride. The composition can comprise about 0.001 % w/w to about 0.01 % w/w, about 0.005 % w/w to about 0.008 % w/w, about 0.005 % w/w to about 0.007 % w/w, or about 0.006% w/w of such an anti-foaming agent. The composition can preferably comprise about 0.001 % w/w to about 0.01 % w/w, about 0.005 % w/w to about 0.008 % w/w, about 0.005 % w/w to about 0.007 % w/w of a mono-glyceride.

The liquid thickener composition can comprise a buffering salt, for example, a citrate, especially sodium citrate. Any buffering salt in any amount may be suitable provided, if it is of food grade and provides in combination with the other ingredients the desired pH of the composition. The composition can comprise about 0.5 % w/w to about 1.5 % w/w, about 0.7 % w/w to about 1.30 % w/w, about 0.85 % w/w to about 1.15 % w/w, or about 0.99% w/w of the buffering salt. Preferably, the composition can comprise about 0.5 % w/w to about 1.5 % w/w, about 0.7 % w/w to about 1.30 % w/w, more preferably about 0.85 % w/w to about 1.15 % w/w of the citrate (e.g., sodium citrate).

The liquid thickener composition can furthermore comprise a food acid, preferably selected from phosphoric acid and/or citric acid, more preferably in an amount of about 0.2 % w/w to about 2 % w/w, about 0.3 % w/w to about 1.7 % w/w, about 0.4 % w/w to about 1.5 % w/w, more preferably about 0.5 % w/w to about 1.5 % w/w, or even about 0.5 % w/w to about 1.2 % w/w and most preferably between about 0.5 % w/w to about 1.0 % w/w, of the composition. A food acid, if added herein, is typically calculated as a pure acid. If e.g., phosphoric acid is added in a concentration of 75%, the pure phosphoric acid, e.g., of 10 ml, would be 7.5 ml.

The liquid thickener composition furthermore comprises water, preferably in an amount of 50 % w/w and 82% w/w, more preferably 55% w/w to 77% w/w, of the composition.

According to a particularly preferred embodiment, the liquid thickener composition of the current invention may comprise:
a) about 4% w/w to about 20 % w/w, or any range disclosed above, and most preferably about 7% w/w to about 9 % w/w or even about 7.5 % w/w to about 8.5 % w/w of a xanthan gum as defined herein,
b) about 10 % w/w to about 50 % w/w, or even about 10 % w/w to 40% w/w, likewise preferably about 10 % w/w to about 35 % w/w of an acacia gum as defined herein, e.g.,
   - about 10 % w/w to about 40 % w/w, or any range disclosed above, and most preferably about 17.5 % w/w to about 18.5 % w/w of an acacia gum as defined herein, e.g., acacia senegal, or alternatively
   - about 20 % w/w to about 50 % w/w, or any range disclosed above, and most preferably about 27.5 % w/w to about 32.5 % w/w, of an acacia gum as defined herein, e.g., acacia seyal, or any other acacia gum, except acacia senegal, or likewise alternatively,
   - a mixture of acacia senegal with acacia seyal or any other acacia gum in a range of from about 10 % w/w to about 50 % w/w, about 10 % w/w to about 40 % w/w, likewise preferably about 10 % w/w to about 35 % w/w, or any range disclosed above;
   wherein acacia senegal is preferred;
c) optionally a salt, preferably a divalent earth alkaline salt, especially a calcium salt, a magnesium salt, e.g., CaCl₂ or MgCl₂, calcium chloride dihydrate, magnesium chloride dihydrate e.g.,
   - between about 0.01 % w/w to about 0.7 % w/w, or any range disclosed above, most preferably between about 0.1 % w/w to about 0.25 % w/w of a calcium salt, preferably anhydrous calcium chloride, CaCl₂, or calcium chloride dihydrate, more preferably calcium chloride dihydrate, and/or
   - between about 0.01 % w/w to about 0.7 % w/w, or any range disclosed above, most preferably between about 0.1 % w/w to about 0.25 % w/w of a magnesium salt, preferably anhydrous magnesium chloride, MgCl₂, or magnesium chloride dihydrate, more preferably magnesium chloride dihydrate;
d) at least one preservative, more preferably, at least two different preservatives, wherein optionally one of the preservatives is a sorbate such as potassium sorbate, and optionally the second preservative is a benzoate, such as sodium benzoate, preferably each preservative in a range of about 0.05 % w/w to about 0.09 % w/w of the composition;
e) a buffering salt, preferably selected from citrate or sodium citrate, more preferably in an amount of about 0.5 % w/w to about 1.5 % w/w, or any range disclosed above, most preferably about 0.85 % w/w to about 1.15 % w/w;
f) an antifoaming agent selected from monoglycerides (of fatty acids) and/or diglycerides (of fatty acids), preferably monoglycerides, in an in amount of about 0.001 % w/w to about 0.01 % w/w, or any range disclosed above, most preferably about 0.005 % w/w to about 0.007 % w/w, of an anti-foam agent;
g) a food acid, preferably selected from phosphoric acid and/or citric acid, more preferably in an amount of about 0.2 % w/w to about 2 % w/w, or any range disclosed above, most preferably of about 0.5 % w/w to about 1 % w/w;
h) optionally pectin and/or low methoxy pectin, or a combination of pectin and/or low methoxy pectin;
i) water, typically in an amount of 50 % w/w and 82% w/w, more preferably 55% w/w to 77% w/w of the composition.

The liquid thickener composition can exhibit a pH of between about 3.0 and about 4.5 (e.g., a pH of about 3.0, 3.1, 3.2, 3.3, 3.4, 3.5, 3.6, 3.7, 3.8, 3.9, 4.0, 4.1, 4.2, 4.3, 4.4, 4.5, and any range therein). Preferably, the pH of the liquid thickener composition is between about 3.5 and 4.1, between about 3.6 and about 4.0, between about 3.7 and about 4.0, or about 3.7, 3.8 or 3.9. The acidic pH of the liquid thickener composition may be achieved by any means known in the art, for example, by the addition of a food acid, such as e.g. phosphoric acid, e.g., an about 75% solution of phosphoric acid.

The liquid thickener composition described herein when added in a pre-determined amount to a liquid, a beverage or a foodstuff may not substantially alter desirable characteristics thereof, such as the original flavor and/or color of the foodstuff. In this regard, the liquid composition can make little or no flavor and/or color contribution to said foodstuff when added in a desirable amount thereto. Additionally, it is preferable that the amount of the liquid composition to be added to a foodstuff to achieve a desirable viscosity thereof is as small as possible so as to avoid diluting the flavor and/or color characteristics of the foodstuff.

The liquid thickener composition described herein is flowable. The liquid thickener composition can have a viscosity of less than 2500 mPa.s, of less than 2000 mPa.s, or preferably less than 1500 mPa.s. Such a viscosity of a liquid thickener composition is the viscosity of the liquid thickener composition prior to being diluted by a liquid or a beverage and when storing the same in a bottle or container, i.e., prior to reconstitution. The liquid thickener composition can be of such a viscosity that it may be dispensed easily, such as from a pump dispenser or a sachet, as well as being able to be dispersed with little or no agitation (i.e., a low shear mixing force exerted by a mechanical stirrer or hand stirring) when added in a pre-determined amount to an aqueous liquid or aqueous liquid solid mixture foodstuff. Viscosity is measured preferably at room temperature (20°C) and preferably at a shear rate of 50s⁻¹.

The liquid thickener composition prior to reconstitution can therefore have generally a viscosity of about 100, 150, 200, 250, 300, 350, 400, 450, 500, 550, 600, 650, 700, 750, 800, 850, 900, 950, 1000, 1050, 1 100, 1 150, 1200, 1250, 1300, 1350, 1400, 1450, 1500, 1550, 1600, 1650, 1700, 1750, 1800, 1850, 1900, 1950, 2000, 2050, 2100, 2150, 2200, 2250, 2300, 2350, 2400, 2450, or 2500 mPa.s, or any range formed from such values, e.g., between 100 and 2500 mPa.s. More preferably, the liquid thickener composition prior to reconstitution can have a viscosity of between about 100, 150, 200, 250, 300, 350, or 400 mPa.s to about 1100 mPa.s, even more preferably between about 500 mPa.s to about 1000 mPa.s. Most preferably, the liquid thickener composition can have a viscosity of between about 550 to about 950 mPa.s. Preferably, the liquid thickener composition is of a viscosity that is pump dispensable. Viscosity is measured preferably at room temperature (20°C) and preferably at a shear rate of 50s⁻¹.

The viscosity of the liquid thickener composition (and generally of a composition, such as a liquid or beverage or food composition) as defined herein may be measured by any means known in the art. For example, viscosity may be measured using an Anton Paar Physica MCR501 rheometer or similar device. Preferably, viscosity is measured herein with an Anton Paar Physica MCR501 rheometer or similar device in mPa.s at a shear rate of 50s⁻¹ and at room temperature (20°C).

The invention is also directed to a thickened composition, especially a liquid thickened composition comprising the liquid thickener composition. Such a composition can also be defined as a "reconstituted" thickener composition. Viscosity of thickened compositions generally can be determined on basis of predefined viscosity levels.

In dysphagia, viscosity levels have historically been defined according to levels found in the National Dysphagia Diet (NDD) in the US for starch-based products, which define viscosity levels as "Nectar" (50-350 mPa.s), "Honey" (351-1750 mPa.s), and "Pudding" (>1750 mPa.s), measured at 20°C and at a shear rate of 50s⁻¹.

However, NDD levels are originally defined for starch-based products are not applicable easily for xanthan-based polymers since xanthan is a shear-thinning polymer, while starch is not. NDD levels therefore do not match properly with required viscosities based on xanthan products, since lower viscosities can be applied in xanthan-based products due to the shear thinning behavior of xanthan. No new standards have appeared to similarly describe xanthan-based thickeners.

Notably, xanthan-based thickeners have been in the market for more than 10 years now (e.g., ThickenUp Clear (TUC) from Société des Produits Nestlé), and have a long record of safe use. There have been numerous publications, Clinical trials and over 1 billion safe swallows with such products. The viscosity levels of TUC have been carefully measured and described on a rheometer at 50/s and 20°C. In addition, shear sweeps from 0-100/s have been carried out to measure the shear-thinning characteristics of TUC to describe the mechanical abuse in the mouth (low values) and in the throat during swallowing (higher values, i.e., about 800/s).

It is also well accepted in the dysphagia community that viscosity is a reliable surrogate marker for safety, and that in general higher viscosity leads to higher effective intervention.

The herein described inventive liquid thickener composition was designed to behave similarly to TUC in terms of thickening, within the generally accepted measurement limits/tolerances of a rheometer.

In view of the above, clinical trials on xanthan-based thickeners therefore have typically yielded appropriate corresponding ranges for viscosity for nectar, honey and pudding.

More recently, the IDDSI system has appeared as a measurement tool (based on volume emptying of a calibrated syringe). The new levels are defined as Levels 1-4, also termed level 1 = "slightly thick", level 2 = "mildly thick", level 3 = "moderately thick", and level 4 = "extremely thick", etc. Measurement of such levels is preferably carried out as defined by the International Dysphagia Diet Standardisation Initiative (IDDSI), e.g., available under https://link.springer.com/article/10.1007/s00455-016-9758-y, or as published in Cichero, J.A.Y., Lam, P., Steele, C.M. et al. Development of International Terminology and Definitions for Texture-Modified Foods and Thickened Fluids Used in Dysphagia Management: The IDDSI Framework. Dysphagia 32, 293-314 (2017), https://doi.org/10.1007/s00455-016-9758-y.

Broadly speaking, nectar, honey and pudding (measured on a rheometer at 20°C and a shear rate of 50 s⁻¹) correspond to IDDSI Levels 2, 3 and 4 respectively, preferably when measured in a syringe according to measurement protocol.

In view of the above, the current application therefore defines levels in analogy (but not necessarily identical) to IDDSI levels 1, 2, 3 and 4, corresponding to stages 1 = "slightly thick", 2 = "mildly thick", 3 = "moderately thick", and 4 = "extremely thick". Such levels always refer to the (final) thickened composition, i.e., a composition such as a liquid, beverage, or foodstuff, to which the liquid thickener composition according to the current invention was added. Corresponding doses to achieve such desired viscosity levels are as defined further below.

The liquid thickener composition is therefore preferably configured to be delivered in one or more doses of a predetermined volume to a reference volume of foodstuff, preferably a liquid or a beverage, resulting in the thickened composition, such that one, two, three, four, five, six, or even more doses of the predetermined volume of the composition suitably increase the viscosity of said liquid, beverage, or foodstuff to inventive first, second, third and fourth viscosity levels respectively, etc..

In the context of the present invention the predetermined volume or dose to be added to a reference volume of the liquid, beverage, or foodstuff is typically between 1 and 10 ml, preferably between 4 and 7 ml, likewise preferably between 4.5 and 6.5 ml, more preferably about 4.3 to 4.8 ml, e.g., 2.3, 4.1, 4.3, 4.6, 4.8, 5, 5.2, 5.5, 6 or 6.5 ml, most preferably 4.3, 4.6, 4.8, e.g., 4.6.

The reference volume of the foodstuff, which is preferably a semi-liquid or liquid composition, e.g., a liquid, a beverage or a foodstuff, to which the predetermined volume or dose of the liquid thickener composition is added to form the thickened composition, is typically between about 100 to 250 ml, preferably 100, 150, 200 or 250 ml, more preferably 150 or 200 ml, even more preferably 150 ml.

The reference volume of the liquid, beverage or foodstuff is typically dependent on the temperature of the foodstuff to which the liquid thickener composition is added. The inventors, however, now surprisingly discovered that the current combination of xanthan and acacia in the herein described thickener composition allows a "one fits all" approach, i.e., dosages as defined herein fit most cold and hot beverages or foodstuff without necessarily adapting the reference volume. If a desired viscosity may nevertheless not be achieved, the amount of a liquid thickener composition may be increased if the viscosity is too low, e.g., by adding one or more doses, or by reducing the number of doses, if the viscosity is too high. Accordingly, it is an advantage of the current invention that only one reference volume of the liquid, beverage or foodstuff needs to be applied.

Nevertheless, as an optional embodiment, a cold and a hot liquid, beverage or foodstuff may be distinguished, the cold liquid, beverage or foodstuff preferably being at about 4°C, the reference cold liquid, beverage or foodstuff preferably selected from milk, the hot liquid, beverage or foodstuff preferably being at about 45°C, the reference hot food stuff preferably selected from coffee (e.g., 100 % *Coffea Arabica*).

According to a preferred aspect of the current invention, the number of doses to achieve the herein defined inventive viscosity levels 1 to 4 in liquids (e.g., milk at 4°C, water at 20°C, , coffee at 45°C, etc.), are as follows:

| Inventive viscosity levels (in analogy to levels) | Number of doses/150 ml (according to the invention) |
|---|---|
| 1 - "slightly thick" | 1 |
| 2 - "mildly thick" - "nectar" | 2 |
| 3 - "moderately thick" - "honey" | 4 |
| 4 - "extremely thick" - "pudding" | 6 |

As a skilled person may appreciate, the number of required doses for inventive viscosity levels or for levels may be adjusted, if required and appropriate.

According to a particular embodiment, the thickened composition after reconstitution, that may be prepared by adding a liquid thickener composition to a liquid, beverage or foodstuff, preferably may have a viscosity of between 1 and 1500 mPa.s.

More preferably, the thickened composition after reconstitution may exhibit a viscosity level according to one of inventive viscosity levels 1, 2, 3 or 4 as defined herein.

In view of the above, inventive viscosity level 1 "slightly thick" is preferably between about 1 and 120 mPa.s, preferably between about 5 and 120 mPa.s, or between about 10 and 120 mPa.s, likewise preferably between about 20 and about 120 mPa.s, more preferably between about 40 and about 110 mPa.s, even more preferably between about 60 and about 110 mPa.s, and most preferably between about 80 and about 100 mPa.s, e.g., about 1, 2, 3, 4, 5, 6, 7, 8, 9, 10, 15, 20, 25, 30, 35, 40, 45, 50, 55, 60, 65, 70, 75, 80, 85, 90, 95, 100, 105, 110, 115 and 120 mPa.s and any range therein. Viscosity is measured preferably at room temperature (20°C) and preferably at a shear rate of 50s⁻¹.

In view of the above, inventive viscosity level 2 "mildly thick" is preferably between about 121 and 300 mPa.s, or between about 125 and 250 mPa.s, likewise preferably between about 130 and 240 mPa.s, more preferably between about 140 and 220 mPa.s, even more preferably between about 145 and 210 mPa.s, and most preferably between about 150 and 200 mPa.s, e.g., about 121, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290 and 300 mPa.s and any range therein. Viscosity is measured preferably at room temperature (20°C) and preferably at a shear rate of 50s⁻¹.

In view of the above, inventive viscosity level 3 "moderately thick" is preferably between about 301 and 500 mPa.s, or between about 315 and 485 mPa.s, likewise preferably between about 330 and 470 mPa.s, more preferably between about 345 and 455 mPa.s, even more preferably between about 360 and 440 mPa.s, and most preferably between about 375 and 425 mPa.s, e.g., about 301, 305, 310, 315, 320, 325, 330, 335, 340, 345, 350, 355, 360, 365, 370, 375, 380, 385, 390, 395, 400, 405, 410, 415, 420, 425, 430, 435, 440, 445, 450, 455, 460, 465, 470, 475, 480, 485, 490, 495 and 500 mPa.s and any range therein. Viscosity is measured preferably at room temperature (20°C) and preferably at a shear rate of 50s⁻¹.

In view of the above, inventive viscosity level 4 "extremely thick" is preferably > 501 mPa.s, such as e.g., between about 501 and 900 mPa.s, or between about 520 and 850 mPa.s, likewise preferably between about 540 and 800 mPa.s, more preferably between about 560 and 750 mPa.s, even more preferably between about 580 and 700 mPa.s, and most preferably between about 600 and 650 mPa.s, e.g., about 501, 505, 510, 515, 520, 525, 530, 535, 540, 545, 550, 555, 560, 565, 570, 575, 580, 585, 590, 600, 605, 610, 615, 620, 625, 630, 635, 640, 645, 660, 665, 660, 665, 670, 675, 680, 685, 690, 700, 705, 710, 715, 720, 725, 730, 735, 740, 745, 770, 775, 770, 775, 770, 775, 780, 785, 790, 800, 805, 810, 815, 820, 825, 830, 835, 840, 845, 880, 885, 880, 885, 870, 875, 880, 885, 890 and 900 mPa.s and any range therein. Viscosity is measured preferably at room temperature (20°C) and preferably at a shear rate of 50s⁻¹.

According to an alternatively preferred embodiment, the thickened composition after reconstitution may exhibit any of IDDSI levels 1-4.

Furthermore, it has been surprisingly found that, unlike powder thickeners, the inventive liquid thickener composition can be modified from one level to a higher level by additional dispensation of the liquid thickener composition. For example, if one assumes that a stable inventive viscosity level 1 "slightly thick" has been achieved by the addition of 1 dose of the inventive liquid thickener composition into 150mL of a liquid, the addition of a further dose will result typically in a further thickening of the reconstituted liquid to inventive viscosity level 2 "mildly thick". The addition of two further doses of the inventive liquid thickener composition will result in a further thickening of the reconstituted liquid to inventive viscosity level 3 "moderately thick", and the addition of two further doses of the liquid thickener composition will result in a further thickening of the reconstituted liquid to inventive viscosity level 4 "extremely thick". Similarly, IDDSI levels 1-4 may be obtained by adding one, two four or six doses to a reference volume as defined herein, etc.

The inventive liquid thickener composition is surprisingly stable for at least several months (1, 2, 3, 4, 5, 6), preferably at least six months and more preferably at least 1 year at room temperature, preferably when stored, e.g., in a closed bottle or closed container typically filled under aseptic conditions. Stable is interpreted as meaning that the viscosity remains about constant during envisaged shelf-life time, that the reconstituted viscosity in 150mL of a liquid is (substantially) the same over the shelf-life period and/or no or no substantial phase separation occurs. Accordingly, the formulation can be provided as a pre-packaged product, such as in a metered pump dispenser or in a sachet, to the end user as described below. The end user can reliably calculate the amount of the liquid thickener composition of the invention to add to a food or beverage to achieve a desired end viscosity thereof. The liquid thickener composition of the invention is then easily dispensed and easily mixed into the liquid (e.g., water), beverage or foodstuff to give the thickened composition the desired viscosity. Storage typically occurs at ambient conditions without exposure to sunlight.

The ability to package and use the liquid thickener composition in this way is a result of the combined presence of the xanthan gum and the gum acacia as defined herein in the defined ratios, which inhibits the expression of the viscosity of the xanthan gum (full hydration) until released through the application into a liquid (e.g., water), beverage or foodstuff, typically in the presence of low shear mixing. It also allows an easier handling, particularly with regard to thickening powders, such as Thicken-up Clear, or liquid thickener solutions on the market. Moreover, many starch-based thickener compositions on the market have proven to work only properly for water as a liquid for dilution, while dilution, e.g., in milk, or other liquids deviating from water, cannot be thickened properly or at least show an entirely different thickening behavior than required, partly also leading to fish eyes and lumps, which are to be avoided.

Stability of the liquid thickener composition over time may also be indicated by the retention of color (if any), flavor (if any), separation (if any), microbiological spoilage (if any), viscosity and/or clarity of the liquid composition. Additionally, or alternatively, stability of the liquid thickener composition may be determined by the ability of the composition to impart viscosity consistently and repeatable to a predetermined level when added to a liquid, beverage or foodstuff as defined herein. The stability of the liquid thickener composition can also be determined by using any of the techniques available to a person skilled in art of food science, including microbiological testing to measure the extent and rate of microbiological spoilage; visual inspection for physical changes such as separation and/or sedimentation; sensory evaluation to determine color, flavor and/or clarity changes; and viscosity measurement using a rheometer or similar device. Viscosity may be measured with an Anton Paar Physica MCR501 rheometer or similar device in mPa.s at a shear rate of 50s⁻¹ and at room temperature (20°C).

The invention is also directed to a container comprising the liquid thickener composition. The container can be a container with rigid or flexible walls, for example a pouch. The container allows to store the liquid thickener composition and protect it from outer influences, like microbiological contamination, oxidation, humidity, light and/or radiation. The container may be sealed airtight.

The invention is also directed to a storage and delivery system comprising the container with the liquid thickener composition and a dispenser. The system can be sealed to protect the liquid thickener composition from the atmosphere (oxidation, humidity etc.), and eventually from light.

The dispenser may be provided separate from the container and only combined with the container, for example, prior to first use, e.g., by inserting a pipe of the dispenser into the container, when required. The combination of a container and the dispenser in the inventive storage and delivery system may be considered a system or kit-of-parts. The dispenser may seal after first opening the container again. Moreover, the dispenser may be detachable from the container. Alternatively, the dispenser and the container may be provided as a pre-combined (optionally non-detachable) delivery system.

The dispenser or pump dispenser can deliver a consistent predetermined dose or volume of the liquid thickener composition described herein upon use and through the entire content or volume of the storage and delivery system and can preferably protect the liquid thickener composition from any influences of the environment, for example, the drying effect of an atmosphere. "Consistent" in the context of the current invention preferably means that the dispenser is suitable to release the same amount of the predetermined volume or dose, with a standard deviation of less than 20%, preferably less than 10%, more preferably less than 5%, less than 3% or even less than 2%.

The predetermined volume or dose in the context of the present invention to be added by the dispenser to a reference volume of the liquid, beverage or foodstuff is typically as defined herein between about 1 and 10 ml, preferably between about 4 and 7 ml, likewise preferably between about 4.5 and 6.5 ml, more preferably about 4.3 to 4.8 ml, e.g., about 2.3, about 4.1, about 4.3, about 4.6, about 4.8, about 5, about 5.2, about 5.5, about 6 or about 6.5 ml, most preferably about 4.3, about 4.6, or about 4.8, e.g., about 4.6. Accordingly, the dispenser is typically suitable to dispense an amount of about 4-7 mL per dose.

The container typically has a volume of about 100 ml to 3 litres. For example, in case a container has a volume of 450 ml, 112 to -64 doses/bottle are possible, provided the typical dose is about 4 to 7 ml. This may be suitably calculated for other container volumes and dosages.

Thus, the storage and delivery system can provide a precise and/or accurate dose or volume of the liquid composition to the desired liquid, beverage or foodstuff.

The dispenser can be disposable or for a single use so as to prevent the stability of the liquid thickener composition contained therein being compromised by the introduction of bacterial contamination. Alternatively, a dispenser may be used that is reusable after appropriate cleaning and decontamination. The dispenser may be a pump dispenser or any other dispenser known in the art suitable for dispensing thickened liquids. Preferably, the dispenser is self-sealing, i.e., after providing a predetermined dose the dispenser closes the container such that no contamination of the stored composition with e.g., microorganisms can occur. Also, other outer influences, like oxidation, humidity, light and/or radiation can be kept outside. More preferably, such a self-sealing dispenser seals the composition air-tight. The liquid thickener compositions and/or the storage and delivery system are configured to achieve the required inventive viscosity levels 1-4 as defined herein or levels according to the IDDSI Framework (International Dysphagia Diet Standardization Initiative), 1, 2, 3, or 4 as defined above, or other pre-determined levels as required by a user, by a whole or specific number of pumps (e.g., 1, 2, 3, 4, 5, 6, and so on).

For example, a single pump of the liquid thickener composition from the storage and delivery system when administered to a specific reference volume of liquid, beverage or foodstuff (e.g., 150 ml), may produce an IDDSI level 1 as defined herein. Two pumps of the liquid thickener composition may produce an IDDSI level 2 as defined herein, four pumps of the liquid thickener composition may produce an level 3 as defined herein, and six pumps of the liquid thickener composition may produce an IDDSI level 4 as defined herein, respectively when added to the same specific volume of liquid, beverage or foodstuff, each separately considered with regard to a reference volume as defined herein. IDDSI levels may be determined as defined herein.

Similarly, it may be preferred that a single pump of the liquid thickener composition from the storage and delivery system, when administered to a specific volume of liquid, beverage or foodstuff (e.g., 150 ml), may produce an inventive viscosity level 1 of 1-120 mPa.s defined herein. Two pumps of the liquid thickener composition may produce an inventive viscosity level 2 of 121-300 mPa.s as defined herein, four pumps of the liquid thickener composition may produce an inventive viscosity level 3 of 301-500 mPa.s as defined herein, and six pumps of the liquid thickener composition may produce an inventive viscosity level 4 of > 501 mPa.s, e.g., 501-900 mPa.s as defined herein, respectively when added to the same specific volume of liquid, beverage or foodstuff, each separately considered with regard to a reference volume as defined herein, preferably of about 150 ml. Viscosity is measured preferably at room temperature (20°C) and preferably at a shear rate of 50s⁻¹.

The invention is also directed to a liquid thickener composition or a liquid thickened composition for use in feeding or administrating a subject suffering from a dehydration, mastication and/or deglutition disease, disorder or condition, preferably dysphagia.

Furthermore, the invention is also directed to a method of administering or feeding a liquid thickener composition or a liquid thickened composition to a subject suffering from a dehydration, mastication and/or deglutition disease, disorder or condition, preferably dysphagia.

It is preferable for this use or method that the liquid thickener composition is separated into appropriate individual portions, such as sachets, or pump dispensable portions.

The invention is also directed to a method for providing a liquid thickened composition comprising:
a. providing the liquid thickener composition as described above and a liquid, beverage or foodstuff for dissolving said liquid thickener composition;
b. mixing said liquid thickener composition and said liquid, beverage or foodstuff for dissolving said liquid thickener composition, preferably 1, 2, 3, 4, 5, or 6 doses of said liquid thickener composition on a reference volume of a liquid, beverage or foodstuff as defined herein; and thereby
c. providing the liquid thickened composition, preferably having any of IDDSI levels 1, 2, 3, or 4; and/or
providing the liquid thickened composition, preferably having a viscosity level of any of the inventive viscosity levels of 1-120 mPa.s (inventive viscosity level 1), of 121-300 mPa.s (inventive viscosity level 2), of 301-500 mPa.s (inventive viscosity level 3) or of > 501 mPa.s (inventive viscosity level 4), typically as measured preferably at room temperature (20°C) and preferably at a shear rate of 50s⁻¹.

The liquid thickened composition is preferably a liquid thickened composition as described above. The liquid, beverage or foodstuff for dissolving said liquid thickener composition can be water, juice, a soft-drink or any suitable beverage or liquid food stuff, such as an aqueous liquid solid mixture foodstuff.

The reconstitution time, i.e., the time in which the desired final viscosity in the liquid thickened compositions is preferably achieved after adding the liquid thickener composition as described above to a liquid, beverage or foodstuff, is preferably between 10 seconds to 40 minutes, or any range as defined herein, e.g., between 10 seconds to 30 minutes, etc., particularly preferred between 30 seconds to 30 minutes, and most preferably of between 4 and 6 or even 4 to 5 minutes, preferably calculated for reconstitution in water as a liquid.

The mixing can be achieved by hand stirring (e.g., with a spoon, fork, stick or a spatula similar device) or any form of (e.g., electrically powered) mechanical stirrer. The mixing is typically carried out under low-shear conditions as defined herein, e.g., mixing with a spoon or fork or stick or a spatula.

Low-shear mixing in the method for preparing the liquid thickened composition may be carried out such as to achieve a maximal or near-maximal increase in viscosity of the composition. Preferably, the low-shear mixing is applied for about 5 or 10 to about 40 seconds (e.g., about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 seconds or any range therein), or more.

Likewise preferably, the low-shear mixing is applied at a mixing speed and rpm numbers as generally defined above, more preferably the method for preparing the liquid thickened composition may apply low-shear mixing by lower shear forces, e.g. hand mixing, e.g. by using a fork.

The liquid thickener composition described herein can increase the viscosity of the liquid, beverage or foodstuff as defined herein, typically by greater than 1.5 mPa.s, preferably by greater than 10, 20, 30 mPa.s, preferably between 30 and 250 mPa.s, or even by greater than 250, 300, 400, 500, 600, 700, 800, or 900 mPa.s or even more, e.g., between 250 and 900 mPa.s, dependent on the viscosity level to be achieved. Viscosity is measured preferably at room temperature (20°C) and preferably at a shear rate of 50^{s-1}.

The viscosity of said liquid thickened composition, upon addition of the liquid thickener composition (i.e. upon reconstitution), is preferably increased to at least 1.5, 2, 2.5, 3, 3.5, 4, 4.5, 5, 5.5, 6, 6.5, 7, 7.5, 8, 8.5, 9, 9.5, 10, 15, 20, 25, 30, 35, 40, 45, 50, 55, 60, 65, 70, 75, 80, 85, 90, 95, 100, 110, 120, 130, 140, 150, 175, 200, 250, 300, 350, 400, 450, 500, 550, 600, 650, 700, 750, 800, 850, 900, 950, 1000, 1050, 1 100, 1 150, 1200, 1250, 1300, 1350, 1400, 1450, 1500 mPa.s, or any range therein. Viscosity is measured preferably at room temperature (20°C) and preferably at a shear rate of 50^{s-1}.

The invention is also directed to a method for producing a liquid thickener composition comprising:
a. providing a liquid composition comprising acacia gum (acacia gum premix);
b. adding a composition comprising xanthan gum; and thereby
c. providing the liquid thickener composition comprising acacia gum and xanthan gum, and
d. optionally degassing the composition comprising acacia gum and xanthan gum, preferably after adding the composition comprising acacia gum to the composition comprising xanthan gum in step b., preferably prior to storage or further processing of the liquid thickener composition provided in step c.

In step a. of the inventive method for producing a liquid thickener composition a liquid composition is provided comprising acacia gum.

Said liquid composition comprising acacia gum (acacia gum premix) may be prepared by initial dry-mixing at least part of the ingredients as defined for the liquid thickener composition and water, except xanthan. Ingredients may include acacia gum as defined herein, a (divalent earth alkaline) salt as defined herein, a buffering salt as defined herein, optionally at least one preservative as defined herein, optionally an antifoaming agent as defined herein, optionally a food acid as defined herein, optionally pectin and/or low methoxy pectin, and optionally at least one preservative as defined herein. The premix may be prepared by further adding water, optionally containing an antifoaming agent as defined herein, to the initial dry mix, optionally adding remaining ingredients, heating and mixing the composition to prepare the acacia gum premix, and optionally adapting the pH to between 3.0 and 4.5, preferably between about 3.7 and about 4.0. Acacia gum and all further ingredients may be added each in an amount relative to the entire amount in the liquid thickener composition as defined herein.

The method can also comprise (in step a.) providing a liquid comprising a calcium or magnesium salt, an antifoaming agent, a buffering salt, a preservative, or/and a food acid, and adding a composition comprising acacia gum. The composition comprising acacia gum can be a composition comprising acacia gum and (low methoxy) pectin.

It was also found that optionally mixing acacia gum with pectin as defined herein in the acacia gum premix, in particular, mixing with low methoxy pectin prior to adding the xanthan, can further prevent or reduce phase separation of the composition upon storage. It was likewise found that alternatively or additionally the presence of calcium salts or magnesium salts in the composition as defined herein can also prevent or reduce phase separation of the composition upon storage. This effect may also be enhanced when the composition comprises (low methoxy) pectin and calcium salts.

Therefore, the method may also comprise in step a. providing a composition comprising acacia gum and pectin, and adding said composition to a liquid. Preferably, acacia gum and (low methoxy) pectin are mixed by dry blending which provided better shelf-life stability than wet blending. This step is can be performed at around room temperature.

Mixing in step a. can be carried out as a high shear mixing and/or a low shear mixing. High-shear mixing and/or low shear mixing for step a., i.e., on the acacia premix prior to adding xanthan, is therefore preferably carried out as depicted above in the context of the current invention for high-shear mixing and low shear mixing, more preferably at times and speeds/rpm numbers as defined above for high shear mixing and/or a low shear mixing.

More preferably, the low-shear mixing for step a. is preferably carried out at a speed of from about 10 rpm to about 350 rpm, preferably at a speed of from about 50 rpm to about 320 rpm, likewise preferably at a speed of from about 100 rpm to about 300 rpm, more preferably at a speed of from about 150 rpm to about 250 rpm, even more preferably at a speed of from about 175 rpm to about 225 rpm, most preferably at a speed of from about 190 rpm to about 210 rpm. Likewise preferably, the "high-shear mixing" for step a. is preferably carried out at a speed of from about 351 rpm or above, e.g., from about 351 to 1100 rpm, preferably at a speed of from about 400 to 1000 rpm, more preferably at a speed of from about 450 to 900 rpm, even more preferably at a speed of from about 450 to 800 rpm, likewise more preferably at a speed of from about 475 to 775 rpm, most preferably at a speed of from about 500 to 750 rpm, e.g., at a speed of about 500 rpm, about 600 rpm, about 700 rpm or about 750 rpm,. The rpm numbers typically calculated on an YTRON-ZC 0 ContiCone (2,2 kW motor, 50 Hz, 400V, 5mm teeth).

The low-shear and/or high-shear mixing for step a. may be applied for a time as generally defined above, preferably for about 5 or 10 seconds to about 480 seconds, for about 5 seconds to about 240 seconds, for about 5 seconds to about 180 seconds, for about 5 seconds to about 160 seconds, or any range in-between 5 to 480 seconds, formed by any of such values.

Heating in step a. (preferably excluding the mixing of acacia gum and (low methoxy) pectin) typically can be performed at about 50°C to about 80°C, at about 50°C to about 70°C, about 55°C to about 65°, or about 60°C.

More preferably, the acacia gum premix is prepared in the following sequence: dry mixing acacia gum as defined herein, a (divalent earth alkaline) salt as defined herein, a buffering salt as defined herein, optionally at least one preservative as defined herein, optionally an antifoaming agent as defined herein, optionally a food acid as defined herein, optionally pectin and/or low methoxy pectin, adding water, optionally containing an antifoaming agent as defined herein; optionally adapting the pH to between 3.0 and 4.5, preferably between about 3.7 and about 4.0, preferably with a food acid as defined herein; optionally adding at least one preservative as defined herein; mixing the acacia gum premix, preferably for a time and a shear rate as defined herein, preferably at a high shear rate and/or a low shear rate as defined above; and optionally heating the acacia gum premix, preferably to a temperature of between 50 to 80°C, 50°C to 70°C, 55°C to 65°, or about 60°C.

The acacia gum premix, i.e., the liquid composition obtained at the end of step a) and comprising acacia gum and optionally (low methoxy) pectin, optionally a buffering salt, optionally a calcium or magnesium salt, optionally an antifoaming agent, optionally a preservative, and/or optionally a food acid, and yet lacking xanthan can be pasteurized to increase the microbiological stability.

In step b. of the inventive method for producing a liquid thickener composition a composition comprising xanthan gum is added to the acacia gum premix prepared in step a. Said Xanthan may be added as a dry powder to the acacia gum premix.

It was surprisingly found that before adding xanthan in step b. to the composition obtained in step a. cooling down the composition to room temperature (about 20°C to about 30°C, or about 25 °C) reduces phase separation upon storage of the liquid thickener composition. Step b. is thus preferentially performed at room temperature.

It was furthermore found that performing step b. under low shear (or even no shear) and gentle conditions until a homogenous mixture is achieved (less than about 20, 15, or 10 seconds) lowers phase separation upon storage.

Nevertheless, an initial step of a (short) high-shear mixing for step b. may be included preferably followed by low-shear mixing. Such a high-shear mixing for step b. is purely optional and may be carried out preferably at a speed of from about 400 rpm to about 700 rpm, preferably 500 or 600 rpm, more preferably 500 rpm. Rpm numbers are typically calculated on an YTRON-ZC 0 ContiCone (2,2 kW motor, 50 Hz, 400V, 5mm teeth). Initial high shear mixing in this context preferably may be carried out for about 1 second to about 15 seconds, preferably for about 1 second to about 10 seconds, even more preferably for about 1 second to about 5 seconds. If initial high-shear mixing for step b. is carried out for too long or at too high speed, viscosity increases to a dough-like state, which is to be avoided.

Moreover, low-shear mixing for step b. may be carried out e.g., at a speed of from about 190 rpm to about 210 rpm, preferably 200 rpm. Rpm numbers are typically calculated on an YTRON-ZC 0 ContiCone (2,2 kW motor, 50 Hz, 400V, 5mm teeth). Low-shear mixing for step b. is preferably carried out for a time as defined above, more preferably for about 5 or 10 seconds to about 480 seconds, or for about 5 or 10 to about 240 seconds, or even more preferably for about 5 to about 180 seconds, or about 5 to about 60 seconds or even less, likewise preferably for about 5 seconds to about 120 seconds, or for about 5 seconds to about 100 seconds, or for about 5 seconds to about 160 seconds, or for about 5 seconds to about 120 seconds, or for about 5 seconds to about 60 seconds, or any range in-between formed by any of such values.

In step c. of the inventive method for producing a liquid thickener composition the liquid thickener composition comprising acacia gum and xanthan gum is provided following steps a and b.

Optionally, in step d. of the inventive method for producing a liquid thickener composition a degassing step is carried out with the liquid thickener composition provided in step c. It has been surprisingly found that degassing the liquid thickener composition comprising acacia gum and xanthan gum provided in step c. prior to storage or further processing, assists in reducing phase separation phenomena.

It was found that degassing the composition in step d. may suitably prevent phase separation of the liquid thickener composition upon storage. Degassing can be achieved by any method known in the art, for example, by stirring the composition, e.g., at low shear forces, e.g., by gentle mixing using an YTRON-ZC 0 ContiCone (2,2 kW motor, 50 Hz, 400V, 5mm teeth, see above), or any other mechanical device or any further known technique that removes gaseous compounds from the composition, or preferably by "naturally" degassing the composition by storing in a storage tank, or any further known technique. "Degassing" is preferably understood to mean the removal of entrapped air or air bubbles. "Natural" degassing preferably means degassing the composition without further mechanical support, such as stirring, but solely by natural or physical processes over time. Natural degassing in general may occur for 5-12 hours up to 3 or 4 days, more preferably between 12 hours and 3 days or 1 to 3 days, e.g., overnight. Natural degassing may also occur by letting the thickened liquid composition rest overnight (for about 10 to about 15 hours). Degassing may also occur as a combination of e.g., low shear stirring and natural degassing. Degassing preferably occurs before dispensing the composition into smaller volumes for e.g., filling containers or bottles for storage and commercial sale purposes. As an option, degassing can also be carried out on the acacia gum premix, prepared and provided in step a.

According to a further particular embodiment, low-shear mixing and/or high-shear mixing may be carried out on the liquid thickener composition obtained after the optional step of degassing (step d.). Such a low-shear mixing and/or high-shear mixing on the liquid thickener composition as obtained after optional step d. e.g., is purely optional. Preferably, low-shear mixing may be carried out then at any speed defined above for low-shear mixing, e.g. at a speed of from about 190 rpm to about 210 rpm, preferably 200 rpm. Likewise, according to one such particular embodiment, high-shear mixing may be carried out then at any speed defined above for high-shear mixing, e.g., at a speed of from about 475 rpm to about 775 rpm, preferably 500, 600, 700 or 750 rpm, more preferably 600 rpm. In any of these cases rpm numbers are typically calculated on an YTRON-ZC 0 ContiCone (2,2 kW motor, 50 Hz, 400V, 5mm teeth). The low-shear and/or high-shear mixing on the liquid thickener composition obtained after the optional step of degassing (step d.) is preferably applied for about 5 or 10 seconds to about 480 seconds, for about 5 seconds to about 240 seconds, for about 5 seconds to about 180 seconds, for about 5 seconds to about 160, or any range in-between 5 to 480 seconds, formed by any of such values, or values as generally defined herein.

According to a particularly preferred embodiment, a method for producing a liquid thickener composition comprises:
a. providing a liquid composition comprising acacia gum (acacia gum premix), preferably comprising the steps of:
   - preparing the acacia gum premix, preferably by dry mixing
      ➢ acacia gum as defined herein,
      ➢ optionally a (divalent earth alkaline) salt as defined herein,
      ➢ a buffering salt as defined herein,
      ➢ optionally at least one preservative as defined herein,
      ➢ optionally an antifoaming agent as defined herein,
      ➢ optionally a food acid as defined herein,
      ➢ optionally pectin and/or low methoxy pectin,
   - adding water, optionally containing an antifoaming agent as defined herein;
   - optionally adapting the pH to between 3.0 and 4.5, preferably between about 3.7 and about 4.0, preferably with a food acid as defined herein;
   - optionally adding at least one preservative as defined herein;
   - mixing the acacia gum premix, preferably for a time and at a shear rate as defined herein, preferably at a high shear rate;
   - optionally heating the acacia gum premix, preferably to a temperature between 50 to 80°C; optionally cooling down the acacia gum premix;
b. adding to the acacia gum premix a composition comprising xanthan gum, preferably xanthan gum in dry powder form; and preferably mixing the acacia gum premix and the composition comprising xanthan initially at a high shear rate followed by a low shear rate or alternatively exclusively at a low shear rate, preferably for a time as defined herein; thereby
c. providing the liquid thickener composition comprising acacia gum and xanthan gum, wherein the liquid thickener composition comprising acacia gum and xanthan gum is preferably as defined herein, and
d. optionally degassing the liquid thickener composition comprising acacia gum and xanthan gum provided in step c., preferably prior to storage or further processing of the liquid thickener composition provided in step c.

The current invention also concerns a liquid thickener composition as defined herein or a (reconstituted) liquid thickened composition as defined herein prepared by using a liquid thickener composition as defined herein (for diluting a liquid, beverage or foodstuff as defined herein) for use in administrating a subject suffering from a dehydration, mastication, swallowing and/or deglutination disease, disorder or condition, preferably dysphagia, preferably for treating a subject suffering from a dehydration, mastication, swallowing and/or deglutination disease, disorder or condition, preferably dysphagia.

A subject in the context of the current invention is preferably suffering from a dehydration, mastication, swallowing and/or deglutination disease, disorder or condition, preferably dysphagia or being in need of a respective treatment. Such a subject may be understood to include an animal, especially a mammal, and more especially a human that is receiving or intended to receive a treatment, as it is herein defined. A patient may be generally of any age, e.g., a young patient (e.g., between about 0 and 30 years), a medium aged patient (e.g., between about 30 and 50 years) or an elderly patient. More preferably, a patient is an elderly patient, preferably an elderly mammal or human patient, more preferably a human over 50 years of age, even more preferably a human over 60 years of age and most preferably a human over 70 years of age, receiving or intended to receive a treatment, preferably against a disease as defined herein.

As used herein, the terms "treatment," "treat" and "to alleviate" include both prophylactic or preventive treatment (that prevent and/or slow the development of a targeted pathologic condition or disorder) and curative, therapeutic or disease-modifying treatment, including therapeutic measures that cure, slow down, lessen symptoms of, and/or halt progression of a diagnosed pathologic condition or disorder; and treatment of patients at risk of contracting a disease or suspected to have contracted a disease, as well as patients who are ill or have been diagnosed as suffering from a disease or medical condition. The term does not necessarily imply that a subject is treated until total recovery. The terms "treatment" and "treat" also refer to the maintenance and/or promotion of health in an individual not suffering from a disease but who may be susceptible to the development of an unhealthy condition, such as nitrogen imbalance or muscle loss. The terms "treatment," "treat" and "to alleviate" are also intended to include the potentiation or otherwise enhancement of one or more primary prophylactic or therapeutic measure. The terms "treatment," "treat" and "to alleviate" are further intended to include the dietary management of a disease or condition or the dietary management for prophylaxis or prevention a disease or condition. More preferably, the term "treatment" in the context of the present invention refers to prevention and/or treatment of swallowing disorders as described herein, preferably prevention and/or treatment of dysphagia, but also prevention and/or treatment of malnourishment or undernourishment associated with dysphagia, preferably as mentioned above, such as e.g., silent aspiration, pneumonia, aspiration pneumonia, dehydration, pressure ulcers, etc. Treatment also may be accomplished with regard to dysphagia patients or patients highly susceptible of dysphagia or at risk of developing dysphagia, such as patients suffering from stroke, Parkinson's, Alzheimer's, Brain Damage and Multiple Sclerosis, etc.

In this context, providing the inventive thickened composition to patients as described above and particularly to dysphagic patients allows increasing bolus viscosity and thus lending confidence to the patient in being able to consume the different products. The nutritional improvement achieved by an improved food and water intake may lead to an overall healthier condition of the patient and prevent further decline.

Although some preferred embodiments have been described, many modifications and variations may be made thereto in light of the above teachings. It is therefore to be understood that the invention may be practiced otherwise than as specifically described in the Figures and Examples, also by combinations of preferred embodiments as discussed herein and in the claims.

By way of illustration, a series of viscosity thickening curves is shown to demonstrate the thickening characteristics of the inventive liquid thickener composition. Thereby, several embodiments are shown. It is submitted that these examples are not intended to limit the invention accordingly. Inventive liquid thickener compositions are termed in the following "Hydra".

### Figures:

By way of illustration, a series of viscosity thickening curves is shown to demonstrate the thickening characteristics of the inventive liquid thickener composition. Thereby, several embodiments are shown. It is submitted that these examples are not intended to limit the invention accordingly.

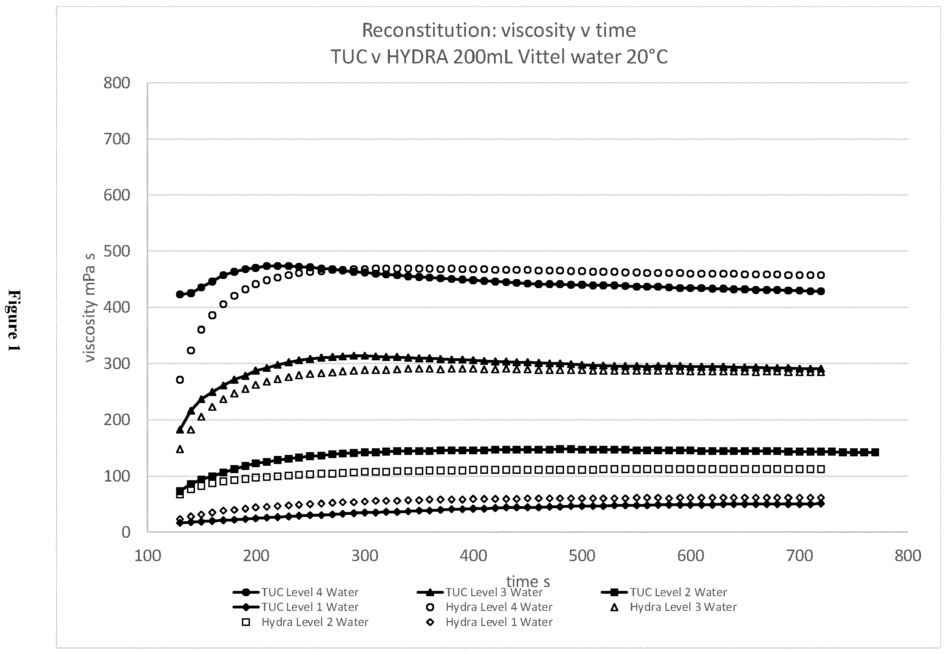

- **Figure 1:**: **Hydra 200mL / TUC 200mL 20°C water**
Figure 1 shows thickening of ambient water (20°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein. As a control, corresponding values of TUC (Thicken-up Clear) were used.
From the bottom, viscosity levels 1 (thin), 2 (slightly thick), 3 (moderately thick) and 4 (extremely thick) as defined herein were achieved. As can be seen, thickening of ambient water (20°C) using the inventive thickener composition are similar to TUC and rise to a constant viscosity value for each of inventive viscosity stages 1, 2, 3 and 4.

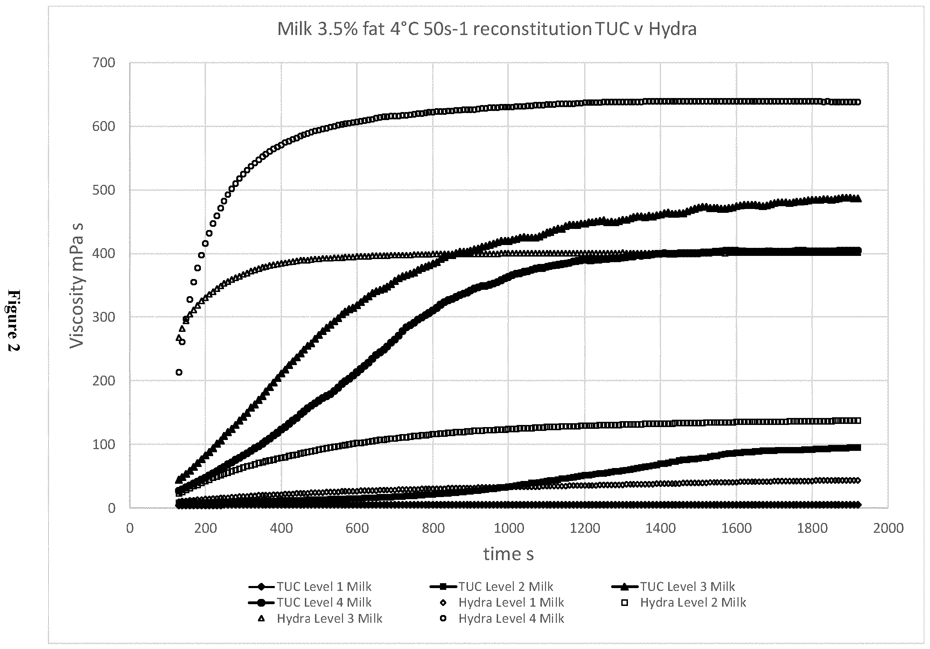

- **Figure 2:**: **Hydra 200mL** / **TUC 200mL cold milk (4°C)**
Figure 2 shows thickening of cold milk (4°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein. As a control, corresponding values of TUC (Thickening-up clear) were used.
From the bottom, viscosity levels 1 (thin), 2 (slightly thick), 3 (moderately thick) and 4 (extremely thick) as defined herein were achieved (from below). As can be seen, thickening of cold milk (4°C) using the inventive thickener composition occurs more rapidly compared to TUC and leads significantly earlier also to a constant viscosity value for each of inventive viscosity stages 1, 2, 3 and 4.

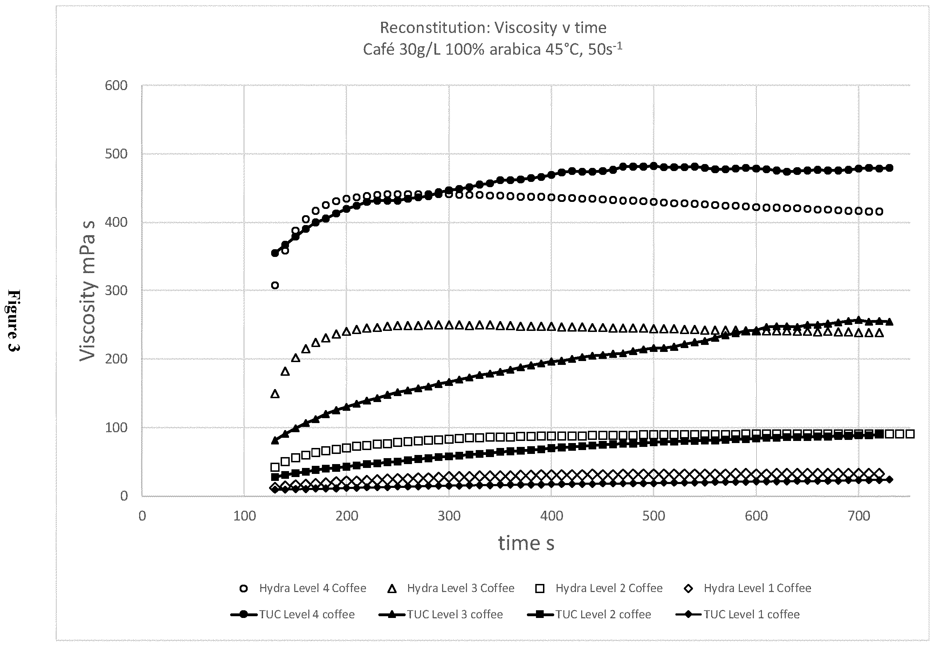

- **Figure 3:**: **Hydra 200mL / TUC 200mL hot coffee (45°C)**
Figure 3 shows thickening of hot coffee (coffee arabica, 45°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an anti-foaming agent as defined herein, and a food acid as defined herein. As a control, corresponding values of TUC (Thickening-up clear) were used.
From the bottom, viscosity levels 1 (thin), 2 (slightly thick), 3 (moderately thick) and 4 (extremely thick) as defined herein were achieved (from below). As can be seen, thickening of hot coffee (45°C) using the inventive thickener composition occurs more rapidly compared to TUC and leads significantly earlier also to a constant viscosity value for each of inventive viscosity stages 1, 2, 3 and 4.

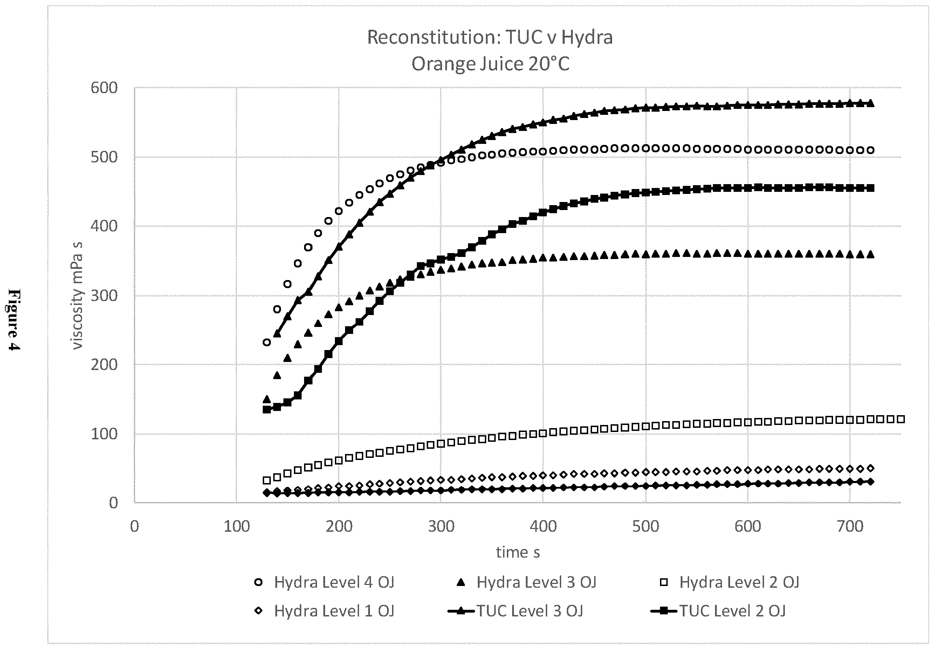

- **Figure 4**: **Hydra 200mL** / **TUC 200mL 20°C orange juice**
Figure 4 shows thickening of orange juice (20°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein. As a control, corresponding values of TUC (Thickening-up clear) were used.
From the bottom, viscosity levels 1 (thin), 2 (slightly thick), 3 (moderately thick) and 4 (extremely thick) as defined herein were achieved (from below). As can be seen, thickening of orange juice (45°C) using the inventive thickener composition occurs more rapidly compared to TUC for and leads significantly earlier also to a constant viscosity value for each of inventive viscosity stages 1, 2, 3 and 4.

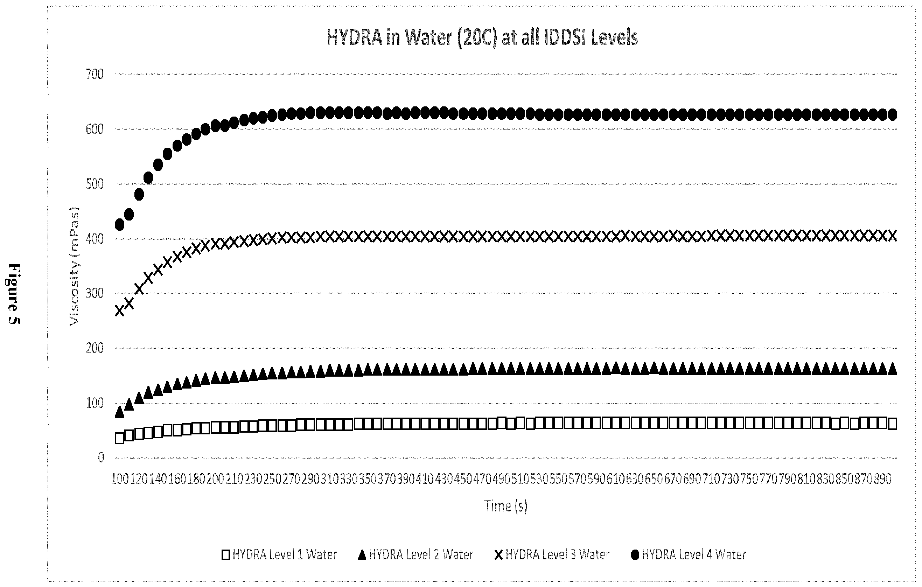

- **Figure 5**: **Hydra 150mL 20°C water**
Figure 5 shows thickening of ambient water (20°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein.
From the bottom, viscosity levels 1 (thin), 2 (slightly thick), 3 (moderately thick) and 4 (extremely thick) as defined herein were achieved. As can be seen, thickening of ambient water (20°C) using the inventive thickener composition rise to a constant viscosity value for each of inventive viscosity stages 1, 2, 3 and 4.

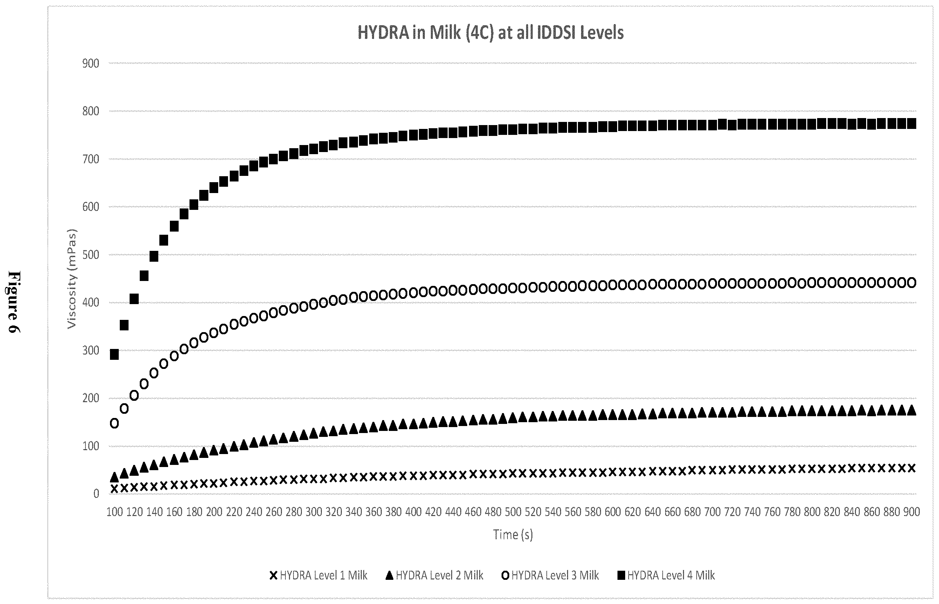

- **Figure 6**: **Hydra 150mL cold milk (4°C)**
Figure 6 shows thickening of cold milk (4°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein.
From the bottom, viscosity levels 1 (thin), 2 (slightly thick), 3 (moderately thick) and 4 (extremely thick) as defined herein were achieved (from below). As can be seen, thickening of cold milk (4°C) using the inventive thickener composition rises to a constant viscosity value for each of inventive viscosity stages 1, 2, 3 and 4.

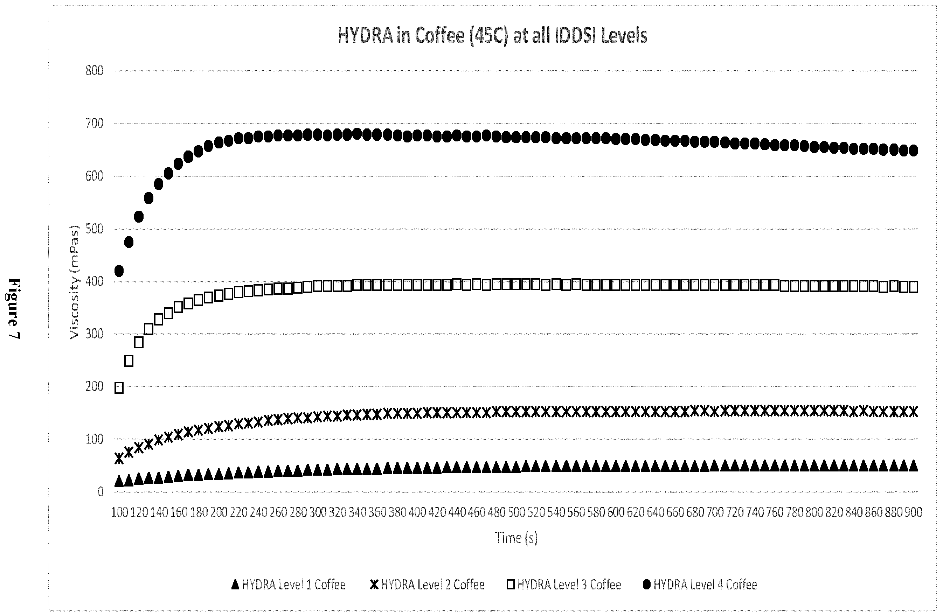

- **Figure 7**: **Hydra 150mL hot coffee (45°C)**
Figure 7 shows thickening of hot coffee (coffee arabica, 45°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an anti-foaming agent as defined herein, and a food acid as defined herein.
From the bottom, viscosity levels 1 (thin), 2 (slightly thick), 3 (moderately thick) and 4 (extremely thick) as defined herein were achieved (from below). As can be seen, thickening of hot coffee (45°C) using the inventive thickener composition rises to a constant viscosity value for each of inventive viscosity stages 1, 2, 3 and 4.

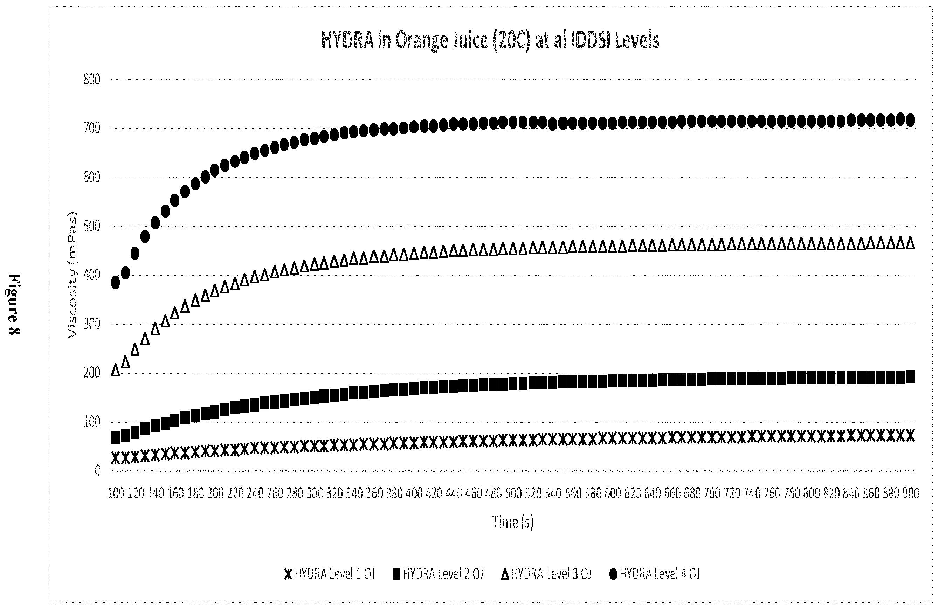

- **Figure 8**: **Hydra 150mL 20°C orange juice**
Figure 8 shows thickening of orange juice (20°C) with an inventive liquid thickener composition (Hydra), comprising xanthan gum in a range from about 7% w/w to about 9 % w/w, acacia senegal gum in a range of about 15 % w/w to about 20 % w/w, a salt as defined herein, two preservatives as defined herein, a buffering salt as defined herein, an antifoaming agent as defined herein, and a food acid as defined herein.
From the bottom, viscosity levels 1 (thin), 2 (slightly thick), 3 (moderately thick) and 4 (extremely thick) as defined herein were achieved (from below). As can be seen, thickening of orange juice (45°C) using the inventive thickener composition rises to a constant viscosity value for each of inventive viscosity stages 1, 2, 3 and 4.

### Examples

### Example 1: Explorative Example of a mixture comprising xanthan gum and locust bean gum

It was tested within which time period a thickener solution comprising xanthan gum and locust bean gum can be reconstituted to a thickened solution exhibiting the rheological characteristics of inventive viscosity levels 1, 2, 3 and 4, or in analogy with IDDSI levels 1-4. The desired viscosity of the thickened solution should build up within a short time (maximally minutes) allowing to prepare the thickened solution for the thickener in an efficient manner.

If not indicated otherwise % are in % (weight/weight).

| Total (g) | Gum acacia (Acacia Senegal) | Buffer (pH3.8, final concentration: | Xanthan Gum | Locust bean gum |
|---|---|---|---|---|
| | | Citric acid 0.25% | | |
| | | Sodium benzoate 0.10 % | | |
| | | Potassium sorbate 0.10% ) | | |
| 25 | 20.00% | 74.00% | 3.00% | 3.00% |

### Preparative steps:

- Dissolve Acacia gum (Acacia Senegal) in buffer in a 50 mL plastic tube
- Add Xanthan gum, mix well using a metal spatula
- Add Locust bean gum, mix well using a metal spatula
- Transfer the mixture into a glass tube
- Pasteurize the mixture for 10 min in 90°C water bath

### For the viscosity measurements:

- Reconstitute in water as needed:
   Level 2 "Mildly Thick": 1.25 g of thickener to 25 g of thickened solution;
   Level 3 "Moderately Thick": 2.5 g of thickener to 25 g of thickened solution;
   Level 4 "Extremely Thick" 3.75 g of thickener to 25 g of thickened solution.
   Reconstitution is as generally described above.
   As a reference Thicken-up clear (TUC) was used with an artificial "Mildly Thick" level of 0.131 Pa.s at 50 s⁻¹.

Viscosity data was measured with an Anton Paar Physica MCR501 rheometer at room temperature (20°C) and at 50 s⁻¹ as time progressed after preparation.

The desired viscosity for "Mildly Thick" (about 0.131 Pa s) was not achieved within 3 hours. Results for the other preparations were worse.

Accordingly, the thickener solution comprising xanthan gum and locust bean gum cannot be efficiently handled.

### Example 2: Explorative Example of a mixture comprising xanthan gum and guar gum

It was tested within which time period a thickener solution comprising xanthan gum and guar gum can be reconstituted to a thickened solution exhibiting the rheological characteristics of nectar, honey and pudding. The desired viscosity of the thickened solution should build up within a short time (maximally minutes) allowing to prepare the thickened solution for the thickener in an efficient manner.

| Total (g) | Gum acacia | Buffer (pH3.8, final concentration: | xanthan gum | guar gum |
|---|---|---|---|---|
| | | Citric acid 0.25% | | |
| | | Sodium benzoate 0.10 % | | |
| | | Potassium sorbate 0.10% ) | | |
| 25 | 20.00% | 74.00% | 3.00% | 3.00% |

If not indicated otherwise % are in % (weight/weight).

### Preparative steps:

- Dissolve Acacia gum in buffer in a 50 mL plastic tube
- Add Xanthan gum, mix well using a metal spatula
- Add guar gum, mix well using a metal spatula
- Transfer the mixture into a glass tube
- Pasteurize the mixture for 10 min in 90°C water bath

### For the viscosity measurements:

- Reconstitute in water as needed:
   Level 2 "Mildly Thick": 1.25 g of thickener to 25 g of thickened solution;
   Level 3 " Moderately Thick": 2.5 g of thickener to 25 g of thickened solution;
   Level 4 "Extremely Thick" 3.75 g of thickener to 25 g of thickened solution.
   Reconstitution is as generally described above.
   As a reference Thicken-up clear (TUC) was used with an artificial "Mildly Thick" level of 0.130 Pa.s at 50 s⁻¹.

Viscosity data was measured with an Anton Paar Physica MCR501 rheometer at room temperature (20°C) and at 50 s⁻¹ as time progressed after preparation.

The desired viscosity for "Mildly Thick" (about 0.130 PaS) was not achieved within 2 hours. Results for the other preparations were worse.

Accordingly, the thickener solution comprising xanthan gum and guar gum cannot be efficiently handled.

### Example 3: Explorative Example of a mixture comprising xanthan gum and whey protein

It was tested within which time period a thickener solution comprising xanthan gum and whey protein can be reconstituted to a thickened solution exhibiting the rheological characteristics of viscosity levels 2, 3 and 4, "Mildly Thick", "Moderately Thick" and "Extremely Thick". The desired viscosity of the thickened solution should build up within a short time (maximally minutes) allowing to prepare the thickened solution for the thickener in an efficient manner.

If not indicated otherwise % are in % (weight/weight)

| Total (g) | Gum acacia | Buffer (pH 3.8, final concentration: | xanthan gum | whey protein |
|---|---|---|---|---|
| | | Citric acid 0.25% | | |
| | | Sodium benzoate 0.10 % | | |
| | | Potassium sorbate 0.10% ) | | |
| 25 | 20.00% | 75.00% | 5.00% | 0.00%, |
| | | 74.40% | | 0.60%, or |
| | | 74.00% | | 1.00% |

### Preparative steps:

- Dissolve Acacia gum in buffer in a 50 mL plastic tube
- Add Xanthan gum, mix well using a metal spatula
- Add whey protein using a metal spatula
- Transfer the mixture into a glass tube
- Pasteurize the mixture for 10 min in 90°C water bath

### For the viscosity measurements:

- Reconstitute in spring water as needed:
   Level 2 "Mildly Thick": 1.25 g of thickener to 25 g of thickened solution;
   Level 3 "Moderately Thick": 2.5 g of thickener to 25 g of thickened solution;
   Level 4 "Extremely Thick": 3.75 g of thickener to 25 g of thickened solution.

As a reference Thicken-up clear (TUC) was used with an artificial "Mildly Thick" level of 0.130 Pa.s at 50 s⁻¹.

Viscosity data was measured with an Anton Paar Physica MCR501 rheometer at room temperature (20°C) and at 50 s⁻¹ as time progressed after preparation.

About 90% of the desired viscosity for "Mildly Thick" (about 0.099 PaS) was achieved with 1 % whey within 2 minutes.

However, each of the thickener solutions exhibited slight phase separation after a two days of storage at room temperature.

### Example 4: Explorative Example of a mixture comprising xanthan gum and two varieties of acacia gum for analysis of phase separation behavior

| | Total (g) | Gum Arabic | Buffer (pH3.8, final concentration: | xanthan gum |
|---|---|---|---|---|
| | | | Citric acid 0.25% | |
| | | | Sodium benzoate 0.10 % | |
| | | | Potassium sorbate 0.10% ) | |
| Acacia senegal (contains 12% of arabinogalactan protein, Acacia INS 414) | 25 | 20.00% | 75.00% | 5.00% |
| Low protein Arabic gum (7% of arabinogalactan protein, Acacia S.D. Prem. (high emulsifying)) | 25 | 20.00% | 75.00% | 5.00% |

If not indicated otherwise % are in % (weight/weight).

### Preparative steps:

- Dissolve Acacia gum in buffer in a 50 mL plastic tube
- Add Xanthan gum, mix well using a metal spatula
- Transfer the mixture into a glass tube
- Pasteurize the mixture for 10 min in 90°C water bath

After two days slight phase separation was observed for low protein acacia gum (acacia seyal), but not for acacia senegal gum. No phase separation was observed in further experiments for acacia seyal if applied in higher concentrations as defined herein for acacia seyal.

### Example 5: Explorative Example of a mixture comprising Larch tree arbinogalactan for analysis of phase separation behavior

| | | | | |
|---|---|---|---|---|
| water | 72,2% | 75 | 77 | 74 |
| Larix occidentalis polysaccharide extract | 20 | 20% | 20.00% | 20.00% |
| Xanthan | 7% | 5% | 3% | 3% |
| gellan | 0.08% | 0% | 0% | 3% |

If not indicated otherwise % are in % (weight/weight).

### Preparative steps:

- Dissolve Acacia gum in buffer in a 50 mL plastic tube
- Add Xanthan gum, mix well using a metal spatula
- Add Locust bean gum and gellan if required, mix well using a metal spatula
- Transfer the mixture into a glass tube
- Pasteurize the mixture for 10 min in 90 C water bath

Each of the Locust bean gum compositions that did not comprise gellan gum were non-flowing gels.

The experiments were repeated with a composition comprising gum Arabic, xanthan, and either gellan or guar or mixtures thereof. In each case phase separation was observed after two days.

### Example 6: Optimize gum acacia concentration with regard to phase separation

| Group number | Total (g) | Gum Arabic (Acacia senegal) | Buffer (pH 3.8 components as above) | xanthan |
|---|---|---|---|---|
| 1 | 25 | 15% | 77% | 8% |
| 2 | 25 | 20% | 72% | 8% |
| 3 | 25 | 25% | 67% | 8% |
| 4 | 25 | 30% | 62% | 8% |

If not indicated otherwise % are in % (weight/weight).

### Preparative steps:

- Dissolve Acacia gum in buffer in a 50 mL plastic tube
- Add Xanthan gum, mix well using a metal spatula
- Pasteurize the mixture for 30 min in 90 C water bath

After two days no phase separation was observed in any of the samples.

### Example 7: Optimize gum Arabic concentration with regard to reconstitution speed

| Group number | Total (g) | Gum Arabic (acacia senegal) | Buffer (pH 3.8 components as above) | xanthan |
|---|---|---|---|---|
| 1 | 25 | 13.5% | 78.5% | 8% |
| 2 | 25 | 15% | 77% | 8% |
| 3 | 25 | 17,5% | 74.5% | 8% |
| 4 | 25 | 20% | 72% | 8% |

If not indicated otherwise % are in % (weight/weight).

### Preparative steps:

- Dissolve Acacia gum in buffer in a 50 mL plastic tube
- Add Xanthan gum, mix well using a metal spatula
- Pasteurize the mixture for 30 min in 90 C water bath

After two days no phase separation was observed in any of the samples.
- Reconstitute in water as needed:
   Level 2 "Mildly Thick": 1.25 g of thickener to 25 g of thickened solution;
   Level 3 "Moderately Thick": 2.5 g of thickener to 25 g of thickened solution;
   Level 4 "Extremely Thick" 3.75 g of thickener to 25 g of thickened solution.

Viscosity data was measured with an Anton Paar Physica MCR501 rheometer at room temperature (20°C) and at 50 s⁻¹ as time progressed after preparation.

About 90% of the desired viscosity for each of "Mildly Thick", "Moderately Thick" and "Extremely Thick" was achieved with 15%, 17.5% and 20 % gum acacia within 2 minutes (13.5 % required longer reconstitution times). Thus, the optimal gum Arabic concentration for Senegal acacia gum with respect to reconstitution speed is between 15 and 20 %.

It was also observed that the required viscosities achieved were better with 8% instead of 7 % xanthan gum.

### Example 8: Addition of pectin for reducing phase separation

It was tested whether long-term stability can be improved by adding low methoxy pectin to the composition. All amounts are indicated in % w/w.

| **Recipe 1 - Control** | **Recipe 2 - 0.2% Pectin added to Acacia Gum Premix** | **Recipe 3 - 0.2% Pectin added with Xanthan Gum** |
|---|---|---|
| 0.005-0.007% monoglycerides | 0.005-0.007% monoglycerides | 0.005-0.007% monoglycerides |
| ad 100% water (tbd) | ad 100% water (tbd) | ad 100% water (tbd) |
| 0.05-0.09% sodium benzoate | 0.05-0.09% sodium benzoate | 0.05-0.09% sodium benzoate |
| 0.05-0.09% potassium sorbate | 0.05-0.09% potassium sorbate | 0.05-0.09% potassium sorbate |
| 0.85-1.15% sodium citrate | 0.85-1.15% sodium citrate | 0.85-1.15% sodium citrate |
| 0.5-1.15% phosphoric acid (75% solution) | 0.5-1.15% phosphoric acid (75% solution) | 0.5-1.15% phosphoric acid (75% solution) |
| 17.5% acacia gum | 17.5% acacia gum | 17.5% acacia gum |
| 8% Xanthan Gum - FNCS | 0.2% low methoxy pectin | 8% Xanthan Gum - FNCS |
| | 8% Xanthan Gum - FNCS | 0.2% low methoxy pectin |
| **Process:** | **Process:** | **Process:** |
| Add water and heat to 60°C | Add water and heat to 60°C | Add water and heat to 60°C |
| Add monoglycerides and melt into solution | Add monoglycerides and melt into solution | Add monoglycerides and melt into solution |
| Add potassium sorbate and sodium benzoate | Add potassium sorbate and sodium benzoate | Add potassium sorbate and sodium benzoate |
| Add all sodium citrate | Add all sodium citrate | Add all sodium citrate |
| Add phosphoric acid targeting pH of 3. | Add phosphoric acid targeting pH of 3.7 | Add phosphoric acid targeting pH of 3.7 |
| Add all acacia gum, Mix, | Disperse pectin into acacia gum | Add all acacia gum, Mix, |
| Pasteurize | Add acacia gum and pectin blend to mixer | Pasteurize |
| Once room temperature, add xanthan gum and stir shortly at high shear only when adding xanthan gum (10 seconds) | | Dry blend pectin with xanthan gum |
| | Pasteurize | |
| | Once room temperature, add xanthan gum and stir shortly at high shear only when adding xanthan gum (10 seconds) | Once room temperature, add xanthan/pectin blend and stir shortly at high shear only when adding xanthan gum (10 seconds) |
| Turn off high shear and stir with spatula | | |
| Fill bottles for stability | Turn off high shear and stir with spatula | Turn off high shear and stir with spatula |
| | Fill bottles for stability | Fill bottles for stability |

If not indicated otherwise % are in % (weight/weight).

A mixer used herein is preferably an YTRON-ZC 0 ContiCone (2,2 kW motor, 50 Hz, 400V, 5mm teeth).

Bottles with compositions were centrifuged at 6G for four hours and stored for 3 weeks at 35°C.

Compared to Control, no phase separation was observed with recipe 2 where pectin was dispersed in acacia gum prior to adding the resulting blend to the composition. Recipe 2 showed slightly higher stability than the Control. However, slight phase separation was observed in the sample where pectin was dispersed in xanthan prior to the adding the resulting blend to the composition.

The present disclosure includes the following numbered clauses:
Clause 1. Liquid thickener composition comprising about 1% to about 20 % by weight xanthan gum and about 10 % to about 50 % by weight acacia gum.
Clause 2. Liquid thickener composition according to clause 1 comprising about 4% to about 15%, about 4% to about 12 %, about 5% to about 11 %, about 6 % to about 10 %, about 7 % to about 9 %, about 8 % to about 9 %, or about 8% by weight xanthan gum.
Clause 3. Liquid thickener composition according to any of the preceding clauses comprising about 10 % to about 40 %, about 10 % to about 30 %, about 15 % to about 20 %, about 17 to about 18, or about 18% by weight acacia gum, preferably selected from acacia Senegal, or alternatively about 20 % to about 50 %, about 20 % to about 40 %, or about 25 % to about 35 %, and most preferably about 27.5 % to about 32.5 %, or about 30% by weight acacia gum, preferably selected from acacia seyal.
Clause 4. Liquid thickener composition according to any of the preceding clauses, wherein the acacia gum is selected from acacia senegal or acacia seyal.
Clause 5. Liquid thickener composition according to any of the preceding clauses, further comprising pectin or low methoxy pectin.
Clause 6. Liquid thickener composition according to any of the preceding clauses, further comprising a calcium, magnesium or other suitable divalent salt.
Clause 7. Liquid thickener composition according to any of the preceding clauses, further comprising
   - at least two different preservatives, wherein optionally one preservative is a sorbate salt and the second preservative is a benzoate salt,
   - a buffering salt
   - an antifoaming agent, or/and
   - a food acid.
Clause 8. Container comprising the liquid thickener composition according to any of clauses 1-7.
Clause 9. Storage and delivery system comprising the container of clause 8 and a dispenser.
Clause 10. Liquid thickener composition according to any of clauses 1-7 or a reconstituted liquid thickened composition prepared by using a liquid thickener composition according to any of clauses 1-7 for use in administrating a subject suffering from a dehydration, mastication, swallowing and/or deglutination disease, disorder or condition.
Clause 11. Method for providing a liquid thickened composition comprising:
   a. providing the liquid thickener composition according to any of clauses 1-7 and a liquid, beverage or foodstuff for dissolving said liquid thickener composition;
   b. mixing said liquid thickener composition and said liquid for dissolving said liquid thickener composition, preferably 1, 2, 3, 4, 5, or 6 doses of said liquid thickener composition on a reference volume of a liquid, beverage or foodstuff as defined herein; and thereby
   c. providing the reconstituted liquid thickened composition according to clause 8, preferably having any of IDDSI levels 1, 2, 3, or 4, and/or preferably having a viscosity level 1 of 1-120 mPa.s, a viscosity level 2 of 121-300 mPa.s, a viscosity level 3 of 301-500 mPa.s or a viscosity level 4 of > 501 mPa.s, as measured at room temperature (20°C) and at a shear rate of 50s⁻¹.
Clause 12. Method for producing a liquid thickener composition according to any of clauses 1 to 12, comprising:
   a. Providing a liquid composition comprising acacia gum;
   b. Adding a composition comprising xanthan gum; and thereby
   c. Providing the liquid thickener composition comprising acacia gum and xanthan gum; and
   d. Optionally degassing the composition comprising acacia gum and xanthan provided in step c.
Clause 13. Method according to clause 13, wherein step a) comprises providing a composition comprising acacia gum, and adding said composition to a liquid, thereby providing a liquid composition comprising acacia gum.
Clause 14. Method according to clauses 13 or 14, wherein step a) further comprises providing a buffering salt, and/or an antifoaming agent, and/or a preservative, and/or an acid, and adding to a composition comprising acacia gum.
Clause 15. Method for producing a liquid thickener composition according to any of clauses 12 to 14, comprising:
   a. providing a liquid composition comprising acacia gum (acacia gum premix), comprising the steps of:
      - preparing the acacia gum premix by dry-mixing at least
         ➢ acacia gum,
         ➢ a buffering salt as defined herein,
         ➢ optionally at least one preservative,
         ➢ optionally an antifoaming agent,
         ➢ optionally a food acid,
      - adding water,
      - adapting the pH to between 3.0 and 4.5;
      - mixing the acacia gum premix;
   b. adding to the acacia gum premix a composition comprising xanthan gum; thereby
   c. providing the liquid thickener composition comprising acacia gum and xanthan gum, and
   d. optionally degassing the liquid thickener composition comprising acacia gum and xanthan gum provided in step c.

## Claims

1. Liquid thickener composition comprising about 1% to about 20 % by weight xanthan gum and about 10 % to about 50 % by weight acacia gum.

2. Liquid thickener composition according to claim 1 comprising about 4% to about 15%, about 4% to about 12 %, about 5% to about 11 %, about 6 % to about 10 %, about 7 % to about 9 %, about 8 % to about 9 %, or about 8% by weight xanthan gum.

3. Liquid thickener composition according to any of the preceding claims comprising about 10 % to about 40 %, about 10 % to about 30 %, about 15 % to about 20 %, about 17 to about 18, or about 18% by weight acacia gum, preferably selected from acacia Senegal, or alternatively about 20 % to about 50 %, about 20 % to about 40 %, or about 25 % to about 35 %, and most preferably about 27.5 % to about 32.5 %, or about 30% by weight acacia gum, preferably selected from acacia seyal.

4. Liquid thickener composition according to any of the preceding claims, wherein the acacia gum is selected from acacia senegal or acacia seyal.

5. Liquid thickener composition according to any of the preceding claims, further comprising:
a. pectin or low methoxy pectin; and / or
b. a divalent earth alkaline salt optionally wherein the divalent earth alkaline salt is CaCl₂.

6. Liquid thickener composition according to any of the preceding claims, further comprising at least one preservative, optionally, wherein the preservative is potassium sorbate.

7. Liquid thickener composition according to any of the preceding claims, further comprising
- at least two different preservatives, wherein optionally one preservative is a sorbate salt and the second preservative is a benzoate salt,
- a buffering salt
- an antifoaming agent, or/and
- a food acid.

8. Container comprising the liquid thickener composition according to any of claims 1-7.

9. Storage and delivery system comprising the container of claim 8 and a dispenser.

10. Liquid thickener composition according to any of claims 1-7 or a reconstituted liquid thickened composition prepared by using a liquid thickener composition according to any of claims 1-7 for use in administrating a subject suffering from a dehydration, mastication, swallowing and/or deglutination disease, disorder or condition.

11. Method for providing a liquid thickened composition comprising:
a. providing the liquid thickener composition according to any of claims 1-7 and a liquid, beverage or foodstuff for dissolving said liquid thickener composition;
b. mixing said liquid thickener composition and said liquid for dissolving said liquid thickener composition, preferably 1, 2, 3, 4, 5, or 6 doses of said liquid thickener composition on a reference volume of a liquid, beverage or foodstuff as defined herein; and thereby
c. providing the reconstituted liquid thickened composition according to claim 8, preferably having any of IDDSI levels 1, 2, 3, or 4, and/or preferably having a viscosity level 1 of 1-120 mPa.s, a viscosity level 2 of 121-300 mPa.s, a viscosity level 3 of 301-500 mPa.s or a viscosity level 4 of > 501 mPa.s, as measured at room temperature (20°C) and at a shear rate of 50s⁻¹.

12. Method for producing a liquid thickener composition according to any of claims 1 to 7, comprising:
a. Providing a liquid composition comprising acacia gum;
b. Adding a composition comprising xanthan gum; and thereby
c. Providing the liquid thickener composition comprising acacia gum and xanthan gum; and
d. Optionally degassing the composition comprising acacia gum and xanthan provided in step c.

13. Method according to claim 12, wherein step a) comprises providing a composition comprising acacia gum, and adding said composition to a liquid, thereby providing a liquid composition comprising acacia gum.

14. Method according to claims 12 or 13, wherein step a) further comprises providing a buffering salt, and/or an antifoaming agent, and/or a preservative, and/or an acid, and adding to a composition comprising acacia gum.

15. Method for producing a liquid thickener composition according to any of claims 12 to 14, comprising:
a. providing a liquid composition comprising acacia gum (acacia gum premix), comprising the steps of:
- preparing the acacia gum premix by dry-mixing at least
➢ acacia gum,
➢ a buffering salt as defined herein,
➢ optionally at least one preservative,
➢ optionally an antifoaming agent,
➢ optionally a food acid,
- adding water,
- adapting the pH to between 3.0 and 4.5;
- mixing the acacia gum premix;
b. adding to the acacia gum premix a composition comprising xanthan gum; thereby
c. providing the liquid thickener composition comprising acacia gum and xanthan gum, and
d. optionally degassing the liquid thickener composition comprising acacia gum and xanthan gum provided in step c.
